# EUROPEAN PATENT SPECIFICATION

(11) **EP 1 950 421 B1**
(45) Date of publication and mention of the grant of the patent: **17.10.2012**
(21) Application number: 06822489.8
(22) Date of filing: 27.10.2006
(51) Int. Cl.: F04D 33/00, F04F 7/00, H01M 8/04

(54) **FLUID TRANSFER DEVICE**
FLUIDTRANSFERVORRICHTUNG
DISPOSITIF DE TRANSFERT DE FLUIDE

(30) Priority: 28.10.2005 JP 2005315445; 28.11.2005 JP 2005342684; 28.11.2005 JP 2005342685
(43) Date of publication of application: 30.07.2008
(73) Proprietor: Sanyo Electric Co., Ltd., Osaka 570-8677 (JP)
(72) Inventor: NISHIKAWA, Masato c/o SANYO ELECTRIC CO., LTD., Osaka;5708677 (JP); NAKAMURA, Kentaro c/o Tokyo Institute of Technology, Kanagawa;V2268503 (JP); KIHARA, Hitoshi c/o SANYO ELECTRIC CO., LTD, Osaka;5708677 (JP); NAKAGAWA, Tatsuyuki c/o SANYO ELECTRIC CO., LTD., Osaka;5708677 (JP)
(74) Representative: Holmes, Matthew Peter
(86) International application number: PCT/JP2006/321528
(87) International publication number: WO 2007/049756

(56) References cited:
- DE-A1- 10 345 694
- DE-A1- 10 345 694
- JP-A- 2000 120 600
- JP-A- 2000 120 600
- JP-A- 2000 505 521
- JP-A- 2002 178 507
- JP-A- 2005 257 407
- JP-B2- 2 565 146
- US-A- 5 660 528
- US-A1- 2005 121 171
- MIYAZAKI S ET AL: "A piezo-electric pump driven by a flexural progressive wave" PROCEEDINGS OF THE WORKSHOP ON MICRO ELECTRO MECHANICAL SYSTEMS. INVESTIGATION OF MICRO STRUCTURES, SENSORS, ACTUATORS, MACHINES AND ROBOTS. NARA, JP., JAN. 30 - FEB. 2, 1991; [PROCEEDINGS OF THE WORKSHOP ON MICRO ELECTRO MECHANICAL SYSTEMS], NEW YOR, vol. WORKSHOP 4, 30 January 1991 (1991-01-30), pages 283-288, XP010039648 ISBN: 978-0-87942-641-5

## Description

### Technical Field

The present invention relates to a fluid transfer device for causing a fluid to travel along a channel, and more specifically, to a fluid transfer device for use in an electronic apparatus.

### Background Art

Air blowers using the flexural vibration of piezoelectric ceramics and the like have been conventionally known (see for example Japanese Patent Application Laid-Open Nos. 2000-186699 and 2000-120600).

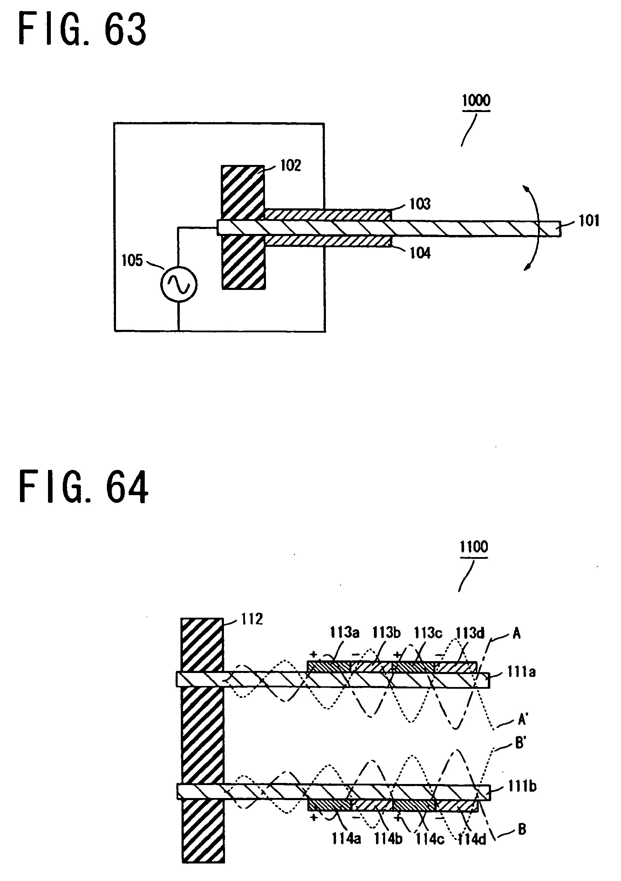

Fig. 63 shows the structure of an air blower using flexural vibration according to a first example of the conventional art. With reference to Fig. 63, the structure of an air blower 1000 using flexural vibration according to the first example of the conventional art is discussed. In the air blower 1000, a vibrating plate 101 formed from a metal plate is fixed at one end to a fixing jig 102. Piezoelectric ceramics 103 and 104 are provided on the upper and lower surfaces of the vibrating plate 101 near the fixing jig 102. An AC voltage source 105 is connected to the piezoelectric ceramics 103 and 104, thereby applying an AC voltage to the piezoelectric ceramics 103 and 104. The air blower 1000 using flexural vibration according to the first example of the conventional art is configured in this manner.

In the above-discussed air blower 1000, an AC voltage of a frequency equal to the resonant frequency of the vibrating plate 101 is applied to each of the piezoelectric ceramics 103 and 104. The control is such that it expands the piezoelectric ceramic 103 while contracting the piezoelectric ceramic 104, thereby allowing the vibrating plate 101 to vibrate greatly at the other end according to the polarity of the AC voltage. This causes the vibrating plate 101 to vibrate like a fan to generate air flow.

Fig. 64 shows the structure and operating principles of an air blower using flexural vibration according to a second example of the conventional art. With reference to Fig. 64, the structure and vibration mode of an air blower 1100 using flexural vibration according to the second example of the conventional art is discussed. In the air blower 1100, vibrating plates 111a and 111b formed from a pair of metal plate arranged in parallel are each fixed at one end to a fixing jig 112. There is provided a sequence of piezoelectric ceramics 113a to 113d on the upper surface of the vibrating plate 111a in a manner in which adjacent ones thereof are opposite in polarity. There is provided a sequence of piezoelectric ceramics 114a to 114d on the lower surface of the vibrating plate 111b in a manner in which the piezoelectric ceramics 114a to 114d are respectively distanced from the fixing jig 112 equally to the piezoelectric ceramics 113a to 113d, and are respectively the same in polarity with the piezoelectric ceramics 113a to 113d. In Fig. 64, the difference in polarity between the piezoelectric ceramics 113a to 113d and 114a to 114d is indicated by "+" and "-". The air blower 1100 using flexural vibration according to the second example of the conventional art is configured in this manner.

In the air bower 1100, AC voltages of frequencies equal to the resonant frequencies of the vibrating plates 111a and 111b are respectively applied in phase to the piezoelectric ceramics 113a to 113d and 114a to 114d. Then, the piezoelectric ceramics 113a, 113c, 114a and 114c are allowed to contract in phase while the piezoelectric ceramics 113b, 113d, 114b and 114d are allowed to contract in phase. Further, the piezoelectric ceramics 113a, 113c, 114a and 114c, and the piezoelectric ceramics 113b, 113d, 114b and 114d are allowed to contract in opposite phase to each other. This generates standing waves in the vibrating plates 111a and 111b respectively as indicated by reference numerals A, A', B and B' in Fig. 64 in response to the polarity reversals of the AC voltages. Then, air radiation pressure is generated in a gap between the vibrating plates 111a and 111b, in areas corresponding to the antinodes of these standing waves and defined between the opposed ones of the piezoelectric ceramics 113a to 113d and 114a to 114d. As a result, air is sucked in from ambient open space into the gap between the vibrating plates 111a and 111b, while air is discharged through the respective other ends that are free ends of the vibrating plates 111a and 111b to form air flow.

The above-discussed air blowers 1000 and 1100 according to the first and second examples of the conventional art are not only intended for use in cooling of LSIs, CPUs and the like arranged inside compact electronic apparatuses, but are also expected to serve as air suppliers for supplying air into fuel cells for use in compact electronic apparatuses (see for example Japanese Patent Application Laid-Open No. 2004-214128).

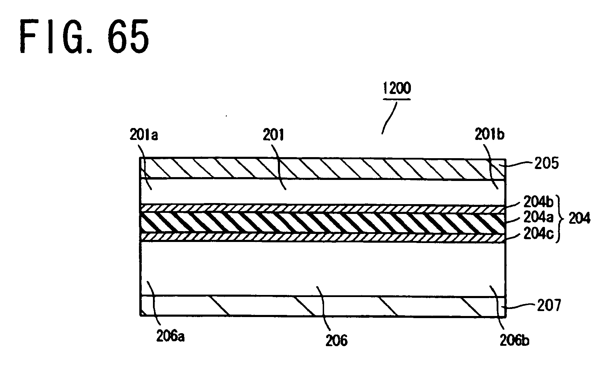

Fig. 65 shows the structure of a conventional fuel cell for use in a compact electronic apparatus. With reference to Fig. 65, the structure of a conventional fuel cell 1200 for use in a compact electronic apparatus is discussed. The fuel cell 1200 comprises a membrane electrode assembly (MEA) 204 including an electrolytic membrane 204a, and a cathode 204b and an anode 204c of a mesh or porous structure and arranged on opposite surfaces of the electrolytic membrane 204a.

A top plate 205 is arranged over the cathode 204b. A first channel 201 with an inlet 201a and an outlet 201b is defined between the top plate 205 and the cathode 204b. A bottom plate 207 is arranged under the anode 204c. A second channel 206 with an inlet 206a and an outlet 206b is defined between the bottom plate 207 and the anode 204c.

In the fuel cell 1200, an oxidizing fluid such as air or oxygen is supplied from the inlet 201a toward the outlet 201b of the first channel 201, and a fuel fluid such as hydrogen or methanol is supplied from the inlet 206a toward the outlet 206b of the second channel 206. The oxidizing fluid and the fuel fluid are thereby supplied to the cathode 204b and the anode 204c of the MEA 204, respectively. This generates electrochemical reaction in the MEA 204, thereby taking electricity out of the cathode 204b and the anode 204c to the outside.

The air blowers 1000 and 1100 according to the first and second examples of the conventional art may be arranged near the inlet 201a of the first channel 201, or near the inlet 206a of the second channel 206, thereby enhancing respective capacities to supply a fuel fluid and an oxidizing fluid. As a result, higher output of the fuel cell is obtained.

However, in both the above-discussed air blowers 1000 and 1100 according to the first and second examples of the conventional art, the vibrating plates 101, and 111a and 111b are required to increase in amplitude in order to supply a fuel fluid and an oxidizing fluid in large quantities. This disadvantageously results in the increase of device size and the increase in energy loss, resulting in inefficient supply of air. When the above-discussed air blowers 1000 and 1100 according to the first and second examples of the conventional art are applied to the above-discussed conventional fuel cell 1200 for use in a compact electronic apparatus, the efficiency of supplying a fuel fluid and an oxidizing fluid is low. This disadvantageously results in insufficient output. Further, with reduced amounts of supply of a fuel fluid and an oxidizing fluid, CO₂ and H₂O generated by the reaction of a fuel fluid and an oxidizing fluid are likely to be accumulated on a surface of the MEA 204. This inhibits electrolytic chemical reaction, disadvantageously resulting in the difficulty of obtaining a high output.

JP 2005-257407 A is considered as the closest prior art and discloses a device for generating a fluid flow in a channel by utilizing acoustic radiation pressure; the subject-matter of claims 1 to 5 is presented in the two-part form over the disclosure of this document. US 2005/0121171 A1 discloses a device for generating an air flow passing through an opening by increasing and decreasing alternately internal pressure of a chamber due to vibration of the vibrating plate. JP 2002/178507 A discloses a device for transferring liquid in a nozzle toward an end of the nozzle by generating surface acoustic wave travelling along a wall of the nozzle on the wall to generate a convex strain deformation on the wall. JP 2000/120600 A discloses a device for generating an air flow in a gap between two vibrating plates by vibrating the two vibrating plates to generate standing wave in the gap. In Miyazaki S et al. ("A PiezoElectric Pump Driven by a Flexural Progressive Wave" PROCEEDINGS OF THE WORKSHOP OF MICRO ELECTRO MECHANICAL SYSTEMS. INVESTIGATION OF MICRO STRUCTURES, SENSORS, ACTUATORS, MACHINES AND ROBOTS. NARA, JP., JAN. 30 - FEB. 2, 1991; [PROCEEDINGS OF THE WORKSHOP ON MICRO ELECTRO MECHANICAL SYSTEMS], NEW YOR, vol. WORKSHOP 4, 30 January 1991 (1991-01-30), pages 283-288, XP010039648), confirmed is fluid transfer and generation of differential pressure by vibrating travelling wave in a narrow channel, indicating that fluid transfer can be generated by differential pressure due to sound pressure.

It is one object of the present invention to provide a compact fluid transfer device capable of causing a fluid to efficiently travel at a high flow rate.

### Disclosure of the Invention

According to a first aspect of the invention there is provided a fluid transfer device as specified in claim 1. According to a second aspect of the invention there is provided a fluid transfer device as specified an claim 2. According to a third aspect of the invention there is provided a fluid transfer device as specified in claim 3. According to a fourth aspect of the invention there is provided a fluid transfer device as specified in claim 4. According to a fifth aspect of the invention there is provided a fluid transfer device as specified in claim 5. An acoustic wave means a wave motion generated by vibration and propagates in a medium.

Acoustic streaming is the steady flow of a fluid generated by an acoustic field. When the vibrating plate and the reflection wall are arranged to face each other and vibration is applied to the vibrating plate to generate an ultrasonic standing wave, air column resonance is generated between the vibrating plate and the reflection wall. This generates eddy acoustic streaming between the vibrating plate and the reflection wall.

The principles of acoustic streaming generation are introduced in some theses such as "Acoustic streaming and radiation pressure", Technical report of IEICE (The Institute of Electronics, Information and Communication Engineers), the reflection wall are arranged to face each other and vibration is applied to the vibrating plate to generate an ultrasonic standing wave, air column resonance is generated between the vibrating plate and the reflection wall. This generates eddy acoustic streaming between the vibrating plate and the reflection wall.

The principles of acoustic streaming generation are introduced in some theses such as "Acoustic streaming and radiation pressure", Technical report of IEICE (The Institute of Electronics, Information and Communication Engineers), US96-93, EA96-97 (January, 1997), or "Mechanism for generating acoustic streaming", Journal A of The Institute of Electronics, Information and Communication Engineers, Vol. J80-A, No. 10, pp. 1614-1620 (October, 1997), for example. However, a technique for stably generating acoustic streaming to cause a fluid to travel by means of this acoustic streaming has not been known.

In the above-discussed fluid transfer device according to the present invention, an acoustic wave generated in the vibrating plate is subjected to multiple reflection in the channel between the vibrating plate and a reflector to increase sound pressure in the channel. This forms acoustic streaming in the channel to generate a force to move a fluid in the channel. As a result, a fluid is caused to travel along the channel. In the present invention, "acoustic streaming" is considered as an idea meaning steady flow of a fluid generated by a sound pressure gradient in an acoustic field.

In the fluid transfer device according to the present invention, a sound pressure gradient is formed in the channel to generate uniform acoustic streaming from the entrance toward the exit of the channel, thereby causing a fluid to travel. Thus, a fluid supply mechanism as an external device to be connected to the channel is not required , therefore, the fluid transfer device is composed by defining the channel by the vibrating plate and the reflection wall, and simply providing the vibrating plate with a vibrating application part such as a piezoelectric element. As a result, the fluid transfer device according to the present invention is a compact device with a simple structure and low power consumption, and can be suitably applied as a fluid transfer device of a fuel cell to be built into a compact electronic apparatus. In addition to a fuel cell, the applicability of the fluid transfer device of the present invention includes electronic circuits, cooling means for use in systems such as solar panels or projection systems, insect repellant devices, air blowers for use in systems such as humidifiers or aspirators, refreshing means for removing materials deposited on sensors and the like to restore sensitivity, propelling means of micromachines, or fluid feed means for use in Lab-on-a-chip devices.

In the fluid transfer device according to the present invention, a fluid is allowed to travel in a fixed direction by acoustic streaming. Therefore, unlike an air blower using the curvature movement of a vibrating plate, the vibrating plate is not required to be increased in amplitude. This easily realizes reduction in size of the device configuration while efficiently causing a fluid to travel. Further, even with a small capacity of the channel, a fluid can be efficiently caused to travel at a high flow rate. As a result, it is possible to obtain a compact fluid transfer device capable of efficiently causing a fluid to travel at a high flow rate. An acoustic wave used in the present invention is preferably a so-called ultrasonic wave with a frequency in a range of about 20kHz to about 200kHz. In this case, the acoustic wave has a short wavelength of some centimeters or shorter. This allows size reduction of the device configuration while efficiently generating acoustic streaming, thereby causing a fluid to travel at low energy. As the frequency of the acoustic wave goes out of a human audible range, the influence upon the human body exerted by the acoustic wave can be suppressed.

In the fluid transfer device according to the present invention, five forms given below are employed as the specific structures of a mechanism for generating a sound pressure gradient in order to reliably cause a fluid to travel in the channel in the predetermined direction along the channel.

According to a first form, the vibrating plate for generating an acoustic wave and the reflection wall for reflecting this acoustic wave are arranged so that the distance therebetween is greater on the side of the exit than on the side of the entrance of the channel. According to this form, the channel has a dimension greater on the side of the exit than on the side of the entrance. Thus, the travel of a fluid in the channel toward the exit results in lower pressure loss than the travel toward the entrance. As a result, the fluid is discharged through the exit of the channel with greater dimension while being sucked in through the entrance with smaller dimension.

In the fluid transfer device in the first form, the vibrating plate is preferably arranged so that the distance from the reflector gradually increases in the direction from the entrance toward the exit. According to this configuration, the dimension of the channel is easily made greater on the side of the exit than on the side of the entrance, while the cross section is gradually changed along the channel. As a result, pressure loss is reduced to cause a fluid to travel more effectively.

In this fluid transfer device, a standing wave of acoustic waves is preferably generated in the channel. According to this configuration, the generation of a standing wave increases further sound pressure in the channel to cause a fluid to travel more effectively.

In this fluid transfer device, a standing wave is preferably generated in the channel on the side of the entrance with smaller dimension. According to this configuration, sound pressure is greater on the side of the entrance of the channel with smaller dimension than on the side of the exit with greater dimension. A sound pressure gradient is thereby formed in which sound pressure decreases in the direction from the entrance toward the exit of the channel. As a result, a fluid in the channel is more easily caused to travel from the entrance toward the exit.

In this fluid transfer device, the vibrating plate is preferably excited at a resonant frequency of the vibrating plate or at a frequency close to the resonant frequency. According to this configuration, the vibrating plate is allowed to increase in amplitude by resonance to increase further sound pressure in the channel.

Preferably, the acoustic field resonant frequency of an air column in the channel and the resonant frequency of the vibrating plate are the same to efficiently generate air flow.

In this fluid transfer device, a vibration application part is preferably provided on a surface of the vibrating plate. According to this configuration, the vibrating plate can be easily caused to vibrate to generate an acoustic wave.

According to a second form of the fluid transfer device of the present invention, the vibrating plate has lower bending stiffness and/or mass on the side of the entrance of the channel, and higher bending stiffness and/or mass on the side of the exit of the channel. The bending stiffness of the vibrating plate is defined by the product of a second moment of area I and a modulus of elasticity E in a particular cross section.

More specifically, the vibrating plate has a lower second moment of area on the side of the entrance of the channel, and a higher second moment of area on the side of the exit of the channel. In other words, the vibrating plate has a lower modulus of elasticity on the side of the entrance of the channel, and a higher modulus of elasticity on the side of the exit of the channel.

In the fluid transfer device in the second form, an ultrasonic standing wave is generated in the vibrating plate to thereby generate air column resonance between the vibrating plate and the reflection wall. The vibrating plate has lower bending stiffness and/or mass on the side of the entrance of the channel, and higher bending stiffness and/or mass on the side of the exit. Thus, the vibrating plate vibrates with greater amplitude on the side of the entrance of the channel, while vibrating with smaller amplitude on the side of the exit of the channel. This makes sound pressure in the channel higher on the side of the entrance, and lower on the side of the exit. As a result, a sound pressure gradient is formed in which sound pressure decreases in the direction from the entrance toward the exit of the channel, thereby forming acoustic streaming in the channel from the entrance toward the exit to cause a fluid in the channel to flow from the entrance toward the exit.

According to a third form of the fluid transfer device of the present invention, the vibrating plate projects outwards from the reflection wall on the side of one of end portions of the channel to define a region that does not face the reflection wall.

In the fluid transfer device in the third form, an ultrasonic standing wave is generated in the vibrating plate to thereby generate air column resonance between the vibrating plate and the reflection wall. The vibrating plate projects outwards from the reflection wall on the side of the exit of the channel to define a region that does not face the reflection wall. Thus, the sound pressure in an acoustic field defined by this region is lower than that in an acoustic field defined by a region between the vibrating plate and the reflection wall facing each other. As a result, a sound pressure gradient is formed in which sound pressure decreases in the direction from the entrance toward the exit of the channel, thereby forming acoustic streaming in the channel from the entrance toward the exit to cause a fluid in the channel to flow from the entrance toward the exit.

According to a fourth form of the fluid transfer device of the present invention, the reflection wall has a higher acoustic impedance on the side of the entrance of the channel, and a lower acoustic impedance on the side of the exit of the channel.

In the fluid transfer device in the fourth form, the reflection wall has a higher acoustic impedance on the side of the entrance of the channel, and a lower acoustic impedance on the side of the exit of the channel. Thus, higher sound pressure is generated on the side of the entrance of the channel while lower sound pressure is generated on the side of the exit of the channel. As a result, a sound pressure gradient is formed in which sound pressure decreases in the direction from the entrance toward the exit of the channel, thereby forming acoustic streaming in the channel from the entrance toward the exit to cause a fluid in the channel to flow from the entrance toward the exit.

According to a fifth form of the fluid transfer device of the present invention, a surface of the reflection wall that faces the vibrating plate has a lower acoustic absorption coefficient on the side of the entrance of the channel, and a higher acoustic absorption coefficient on the side of the exit of the channel.

In the fluid transfer device in the fifth form, the surface of the reflection wall that faces the vibrating plate has a lower acoustic absorption coefficient on the side of the entrance of the channel, and a higher acoustic absorption coefficient on the side of the exit of the channel. Thus, the strength of a reflected wave is higher on the side of the entrance of the channel, and is lower on the side of the exit of the channel. As a result, a sound pressure gradient is formed in which sound pressure decreases in the direction from the entrance toward the exit of the channel, thereby forming acoustic streaming in the channel from the entrance toward the exit to cause a fluid in the channel to flow from the entrance toward the exit.

In a fuel cell, an anode and a cathode are arranged on opposite sides of an electrolytic membrane to form a membrane electrode assembly (MEA). A fluid transfer device is arranged on a surface of the MEA that causes at least either a fuel fluid or an oxidizing fluid to travel.

In this fuel cell, the fluid transfer device of the present invention is used to transfer at least either a fuel fluid or an oxidizing fluid to the MEA. This easily realizes reduction in size of the fuel cell while causing a fuel fluid and an oxidizing fluid to travel effectively. Further, even with a small capacity of the channel, a fuel fluid and an oxidizing fluid can efficiently be caused to travel at high flow rates. As a result, a compact fuel cell capable of efficiently providing high electric power generation is obtained.

In the fuel cell, the vibrating plate and the reflection wall are preferably arranged over the MEA to face each other in the direction parallel to a surface of the MEA. This allows sound pressure in the channel to be controlled by the distance between the vibrating plate and the reflection wall, and by the area of the vibrating plate or the reflection wall. Thus, the dimension of the channel in the direction perpendicular to the surface of the MEA, namely, the dimension of the channel in the direction of the thickness of the MEA can be arbitrarily changed. This allows the reduction in dimension of the channel in the direction of the thickness of the MEA, leading to the reduction in thickness of the fluid transfer device. As a result, the fuel cell can be reduced further in size.

In the fuel cell, the vibrating plate is preferably arranged to face the MEA, and a surface wall of the MEA is preferably used as the reflection wall. This allows space defined between the vibrating plate and the MEA to serve as a channel, thereby realizing simpler configuration of the fuel cell while easily reducing the fuel cell in size. Further, as a result of the action of an acoustic wave on the surface of the MEA, CO₂ and H₂O generated by electrochemical reaction of a fuel fluid and an oxidizing fluid become hard to stick to the surface of the MEA. This suppresses reduction in the output of the fuel cell.

An electronic apparatus according to the present is provided with an electronic circuit section and a fluid transfer device for causing a fluid to travel along a channel that extends along a surface of the electronic circuit section. The fluid transfer device according to the present invention is adapted for use as the fluid transfer device in this electronic apparatus.

Another electronic apparatus present invention is provided with a fuel cell that comprises a membrane electrode assembly with an electrolytic membrane, and an anode and a cathode arranged on opposite sides of the electrolytic membrane. The fuel cell with the above-discussed fluid transfer device according to the present invention is adapted for use as the fuel cell in this electronic apparatus.

### Brief Description of Drawings

According to one configuration there is provided a fuel cell comprising a membrane electrode assembly with an electrolytic membrane and a pair of electrodes formed on opposite surfaces of said electrolytic membrane, and a fluid transfer device for causing a fluid to travel that is at least either a fuel fluid or an oxidizing fluid along a channel formed on a surface of said membrane electrode assembly, wherein, in said fluid transfer device, a vibrating plate for generating an acoustic wave and a reflection wall for reflecting said acoustic wave are arranged to face each other at opposite sides of said channel with said channel held therebetween, and said fluid is caused to travel by a sound pressure gradient formed in said channel by the vibration of said vibrating plate.

The channel may be formed along a surface of said membrane electrode assembly, and supply of a fluid to said membrane electrode assembly proceeds with the flow of said fluid in said channel.

In one embodiment the vibrating plate and said reflection wall of said fluid transfer device are arranged in upright positions with respect to said surface of said membrane electrode assembly.

In another embodiment the vibrating plate of said fluid transfer device is arranged to face said membrane electrode assembly, and a surface wall of said membrane electrode assembly is used as said reflection wall.

The vibrating plate of said fluid transfer device may for instance be arranged perpendicular to said surface of said membrane electrode assembly on each side of said channel, and said reflection wall may be arranged perpendicular to said surface of said membrane electrode assembly at the center of said channel.

The channel may be given an entrance or an exit at the center, said channel also being given an exit or an entrance at each end portion.

The fuel cell may have an inlet through which a fluid is to be sucked in and an outlet through which a fluid is to be discharged, wherein said inlet and said outlet are arranged outside a region that faces said vibrating plate.

A drainage through which a product generated at said membrane electrode assembly is discharged may be arranged near an end portion of said channel of said fluid transfer device.

According to another configuration there is provided an electronic apparatus with a fuel cell that comprises a membrane electrode assembly with an electrolytic membrane, and an anode and a cathode arranged on opposite sides of said electrolytic membrane, said fuel cell comprising a fluid transfer device for supplying a fluid to said anode and/or cathode constituting said membrane electrode assembly, wherein, in said fluid transfer device, a vibrating plate for generating an acoustic wave and a reflection wall for reflecting said acoustic wave are arranged to face each other at opposite sides of a channel with said channel held therebetween, and said fluid is caused to travel by a sound pressure gradient formed in said channel by the vibration of said vibrating plate.

The body of said electronic apparatus may be formed by a pair of casings coupled to each other by a hinge mechanism, said fluid transfer device being built into one of said casings, or said fuel cell may be attached to the rear surface of one of said casings, and said fuel cell being arranged so that the high pressure side of said fluid transfer device is on the side of said hinge mechanism.

In an embodiment the casing of the body of said electronic apparatus is given an inlet through which a fluid is to be sucked in and an outlet through which a fluid is to be discharged, and said inlet and said outlet are arranged so that said outlet is arranged at a higher position with respect to said inlet in normal use of said body of said electronic apparatus.

The actuation of said vibrating plate of said fluid transfer device may be turned on when the power consumption of the body of said electronic apparatus increases.

The actuation of said vibrating plate of said fluid transfer device may be turned off when the power consumption of the body of said electronic apparatus decreases.

Another configuration provides an electronic apparatus with an electronic circuit section and a fluid transfer device for causing a fluid to travel along a channel that extends along a surface of said electronic circuit section, wherein, in said fluid transfer device, a vibrating plate for generating an acoustic wave and a reflection wall for reflecting said acoustic wave are arranged to face each other at opposite sides of said channel with said channel held therebetween, and said fluid is caused to travel by a sound pressure gradient formed in said channel by the vibration of said vibrating plate.

A fluid to be caused to travel by said fluid transfer device may provide cooling of said electronic circuit section.

Fig. 1 is a plan view of a fluid transfer device according to a first embodiment of the present invention;
Fig. 2 is a side view of the fluid transfer device according to the first embodiment of the present invention;
Fig. 3 is a side view showing how a vibrating plate of the fluid transfer device according to the first embodiment of the present invention resonates in the direction in which a fluid travels;
Fig. 4 is a partially cutaway plan view of a fuel cell of a first exemplary configuration according to the first embodiment of the present invention;
Fig. 5 is a sectional view taken in the direction indicated by arrows A in Fig. 4;
Fig. 6 is a sectional view of a fuel cell of a second exemplary configuration according to the first embodiment of the present invention;
Fig. 7 is a side view showing a modification of the fluid transfer device according to the first embodiment of the present invention;
Fig. 8 is a sectional view showing another modification of the fluid transfer device according to the first embodiment of the present invention;
Fig. 9 is a partially cutaway front view showing still another modification of the fluid transfer device according to the first embodiment of the present invention;
Fig. 10 is a perspective view of a fuel cell of a first exemplary configuration provided with a fluid transfer device according to a second embodiment of the present invention;
Fig. 11 is a sectional view taken in the direction parallel to a channel of this fuel cell;
Fig. 12 is a sectional view of a fuel cell of a second exemplary configuration;
Figs. 13 are plan views of various types of vibrating plates in a fuel cell of a third exemplary configuration;
Fig. 14 is a sectional view showing a fluid transfer device provided in a fuel cell of a fourth exemplary configuration;
Fig. 15 is a perspective view showing a fluid transfer device provided in a fuel cell of a fifth exemplary configuration;
Fig. 16 is a sectional view taken in the direction parallel to a channel of this fluid transfer device;
Fig. 17 is a sectional view showing a fluid transfer device provided in a fuel cell of a sixth exemplary configuration;
Fig. 18 is a plan view showing a fluid transfer device provided in a fuel cell of a seventh exemplary configuration;
Figs. 19 are graphs showing the distribution of the amount of displacement of a vibrating plate in a fluid transfer device that is provided in the fuel cell of the fifth exemplary configuration, and the distribution of the amount of displacement of a conventional vibrating plate;
Fig. 20 is a perspective view showing a modification of the fluid transfer device provided in the fuel cell of the first exemplary configuration;
Fig. 21 is a perspective view of a fuel cell of a first exemplary configuration provided with a fluid transfer device according to a third embodiment of the present invention;
Fig. 22 is a sectional view taken in the direction parallel to a channel of this fluid transfer device;
Fig. 23 is a perspective view showing a fluid transfer device provided in a fuel cell of a second exemplary configuration;
Fig. 24 is a sectional view taken in the direction perpendicular to a channel of this fluid transfer device;
Fig. 25 is an exploded perspective view of a fluid transfer device provided in a fuel cell of a third exemplary configuration;
Fig. 26 is a sectional view taken in the direction perpendicular to a channel of this fluid transfer device;
Fig. 27 is a perspective view showing a fluid transfer device provided in a fuel cell of a fourth exemplary configuration;
Fig. 28 is a sectional view taken in the direction parallel to a channel of this fluid transfer device;
Fig. 29 is a perspective view showing a modification of the fluid transfer device provided in the fuel cell of the first exemplary configuration;
Fig. 30 is a sectional view of a fuel cell provided with a fluid transfer device according to a fourth embodiment of the present invention;
Fig. 31 is a sectional view of a fuel cell provided with a fluid transfer device according to a fifth embodiment of the present invention;
Fig. 32 is an exploded perspective view showing a support structure for a vibrating plate;
Fig. 33 is a sectional view showing a support structure for a vibrating plate;
Figs. 34 explain a relationship between positions at which a vibrating plate is supported and condition of vibration;
Fig. 35 is a sectional view showing another support structure for a vibrating plate;
Fig. 36 is a plan view of the vibrating plate in this support structure;
Fig. 37 is a sectional view showing another support structure for a vibrating plate;
Fig. 38 is a plan view of the vibrating plate in this support structure;
Fig. 39 is a sectional view showing another support structure for a vibrating plate;
Fig. 40 is a plan view of the vibrating plate in this support structure;
Fig. 41 is a sectional view showing another support structure for a vibrating plate;
Fig. 42 is a plan view of the vibrating plate in this support structure;
Fig. 43 is a sectional view showing still another support structure for a vibrating plate;
Fig. 44 is a perspective view showing a cellular phone in a folded position into which a fuel cell according to the present invention is built;
Fig. 45 is a perspective view showing this cellular phone in an unfolded position;
Fig. 46 is a perspective view showing a cellular phone in which a fuel cell is attached to the outside of a casing;
Fig. 47 is a perspective view showing a cellular phone in which another fuel cell is attached to the outside of a casing;
Fig. 48 is a perspective view of this cellular phone viewed in a different direction;
Fig. 49 is an exploded perspective view of a fuel cell to be attached to a cellular phone;
Fig. 50 is an exploded perspective view of this fuel cell viewed in a different direction;
Fig. 51 is a sectional view showing air flow inside this fuel cell;
Fig. 52 is a perspective view of a drainage that forms this fuel cell;
Fig. 53 is a sectional view showing the air flow of this fuel cell according to another configuration;
Fig. 54 is a perspective view of a drainage in this another configuration;
Fig. 55 is an enlarged perspective view of a support member for a vibrating plate;
Fig. 56 is a perspective view of another cellular phone into which a fuel cell according to the present invention is built;
Fig. 57 is a perspective view of this cellular phone when viewed from the rear surface;
Fig. 58 is a perspective view of still another cellular phone into which a fuel cell according to the present invention is built;
Fig. 59 is a perspective view of this cellular phone when viewed from the rear surface;
Fig. 60 is a block diagram showing the structure of a cellular phone provided with a fuel cell according to the ;
Fig. 61 is a flow diagram showing how to control a vibration frequency in this cellular phone;
Fig. 62 is a flow diagram showing how to perform ON/OFF control of the actuation of a vibrating plate in this cellular phone;
Fig. 63 is a sectional view showing the structure of an air blower using flexural vibration according to a first example of the conventional art;
Fig. 64 is a sectional view showing the structure and operating principles of an air blower using flexural vibration according to a second example of the conventional art; and
Fig. 65 is a sectional view showing the structure of a conventional fuel cell for use in a compact electronic apparatus.

### Best Mode for Carrying Out the Invention

### (First Embodiment)

### Fluid Transfer Device

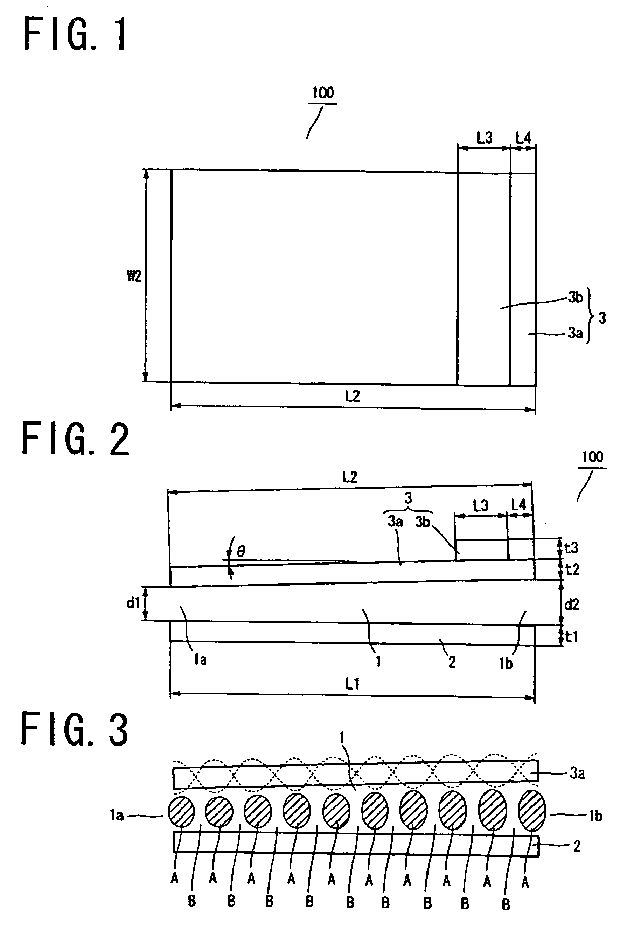

Fig. 1 shows the structure of a fluid transfer device according to a first embodiment of the present invention. Fig. 2 shows the structure of the fluid transfer device according to the first embodiment of the present invention. The structure of a fluid transfer device 100 according to the first embodiment of the present invention is discussed below with reference to Figs. 1 and 2.

In the fluid transfer device 100 according to the first embodiment of the present invention, a reflector 2 in the form of a flat plate and formed from a acrylic plate, and a vibrating body 3 are arranged to face each other with a channel 1 held therebetween and at positions over and under the channel 1. The vibrating body 3 includes a vibrating plate 3a in the form of a flat plate and formed from an Al plate (A5052), and a PZT element 3b ("C203" produced by Fuji Ceramics Corporation) provided on the vibrating plate 3a. The PZT element 3b is an example of a "vibration application part" of the present invention.

As shown in Figs. 1 and 2, the reflector 2 and the vibrating plate 3a respectively have lengths L1 and L2 of about 50mm, widths W1 and W2 of about 30mm, and thicknesses t1 and t2 of about 1mm. The vibrating plate 3a is supported by a support member not shown at an end side of the vibrating plate 3a at which a node is formed in the case of vibration of a vibrating body discussed below in a mode of stripes. As a result, the vibrating plate 3a is arranged so that the distance from the reflector 2 (hereinafter referred to as the height of the channel 1) gradually increases in the direction of the length L1, in a way that the reflection plate 2 and the vibrating plate 3a are tilted at an angle θ of about 2 degrees to set a distance d1 at about 2mm on the side of an inlet 1a, and a distance d2 at about 4mm on the side of an outlet 1b. The inlet 1a and the outlet 1b are examples of an "entrance" and an "exit" of the present invention, respectively.

In the vibrating body 3, the PZT element 3b has a rectangular shape with a length L3 of about 3mm, a width W2 of about 30mm, and a thickness t3 of about 1mm. The PZT element 3b is arranged on the vibrating plate 3a while being spaced a distance L4 of about 7mm away from the end portion of the vibrating plate 3a on the side of the outlet 1b. The fluid transfer device 100 according to the first embodiment of the present invention is configured in this manner.

In the fluid transfer device 100 according to the first embodiment of the present invention, an AC voltage of about 70kHz is applied to the PZT element 3b using an AC power supply (not shown), thereby causing the PZT element 3b to expand and contract in the direction of the length L3 to excite the vibrating plate 3a. This generates an acoustic wave in the vibrating plate 3a. The generated acoustic wave is subjected to multiple reflection in the channel 1 between the reflector 2 and the vibrating plate 3a to increase sound pressure in the channel 1. As a result, acoustic streaming is formed in the channel 1 which generates a force to move air inside the channel 1. Air is an example of a "fluid" of the present invention. The channel 1 is so formed that the height of the channel 1 is greater on the side of the outlet 1b than on the side of the inlet 1a. Thus, the travel of air in the channel 1 toward the outlet 1b results in lower pressure loss than the travel toward the inlet 1a. As a result, air is discharged through the outlet 1b at which the channel 1 has a greater height while being supplied into the channel 1 through the inlet 1a at which the channel 1 has a smaller height.

An acoustic wave generated in the vibrating plate 3a is subjected to multiple reflection in the channel 1 between the reflector 2 and the vibrating plate 3a. Thus, an acoustic wave is allowed to resonate if the height of the channel 1 and the wavelength of the acoustic wave satisfy a condition for resonance. Under the condition where the vibrating plate 3a is arranged in parallel with the reflector 2, and under the same conditions as those employed in the above-discussed fluid transfer device 100 except for the varying height of the channel 1, examination has been performed to find out the distance between the reflector 2 and the vibrating plate 3a that allows the resonance of an acoustic wave in the channel 1. The result is that the resonance of an acoustic wave occurs if the distance between the reflector 2 and the vibrating plate 3a is about 3mm. Accordingly, under the condition where the height of the channel 1 increases in the direction of the length L1 as in the first embodiment of the present invention, an acoustic wave is considered to resonate in the channel 1 on the side of the inlet 1a at which the channel 1 has a height of about 3mm. In this case, a standing wave of acoustic waves is generated in an area of the channel 1 on the side of the inlet 1a, thereby increasing further sound pressure in the channel 1 on the side of the inlet 1a. As a result, air can be caused to more efficiently travel along the channel 1 from the inlet 1a toward the outlet 1b.

In the first embodiment of the present invention, the vibrating body can be excited in various vibration modes by changing the frequency of an AC voltage applied to the PZT element 3b. Here, relationships between resonant frequencies and vibration modes have been found out when the vibrating plate 3a is excited at frequencies in a range of about 20kHz to about 200kHz. The result is shown in Table 1.

**[Table 1]**

| Resonant Frequencies (kHz) | Conditions of Resonant Modes |
|---|---|
| 67 | Standing wave has no node in width direction |
| 70 | Standing wave has nodes in width direction (9 nodes) |
| 85 | Standing wave has no node in width direction |
| 117 | Standing wave has nodes in width direction (12 nodes) |
| 134 | Standing wave has nodes in width direction (13 nodes) |
| 157 | Standing wave has no node in width direction |
| 170 | Standing wave has no node in width direction |
| 171 | Standing wave has no node in width direction |
| 178 | Standing wave has no node in width direction |

As seen from Table 1, the vibrating plate 3a is allowed to resonate at various resonant frequencies and in various resonant modes. Thus, the vibrating plate 3a is allowed to increase further in amplitude by being excited at resonant frequencies, thereby increasing sound pressure in the channel 1 to a greater degree. As a result, air can be caused to more effectively travel along the channel 1 from the inlet 1a toward the outlet 1b. The vibrating plate 3a increases in amplitude as its vibration frequency gets closer to the resonant frequencies. In the case that the vibrating plate 3a is excited at a frequency in a range of about 500Hz with respect to the resonant frequencies, the vibrating plate 3a considerably increases in amplitude. This increases sound pressure in the channel 1 to realize efficient travel of air.

Fig. 3 shows how the vibrating plate 3a of the fluid transfer device according to the first embodiment of the present invention resonates in the direction of travel of a fluid. It is discussed next using Fig. 3 how the vibrating plate 3a of the fluid transfer device 100 according to the first embodiment of the present invention resonates in the direction of the length L1 that is a direction of travel of a fluid.

As seen from Table 1, the vibrating body of the fluid transfer device 100 according to the first embodiment of the present invention can resonate at several resonant frequencies. Some of these resonant frequencies (about 70kHz, about 117kHz and about 134kHz) allow the vibrating body to resonate in a mode of vibration (mode of stripes) that generates resonance in the direction in which the height of the channel 1 increases as indicated by dashed lines in Fig. 3. In this case, with reference to Fig. 1, antinodes and nodes of a standing wave respectively expand in the direction of the width W2 while being alternately arranged to form strips in the direction of the length L2. Thus, the vibrating plate 3a has greater amplitude at antinodes of the standing wave, and therefore, sound pressure in the channel 1 is increased thereat. This forms arrangement in which regions (A) of higher sound pressure and regions (B) of lower sound pressure are alternately present in corresponding relationship with a standing wave generated in the vibrating plate 3a, while forming a sound pressure distribution as a whole in the channel 1 in which sound pressure decreases in the direction in which the height of the channel 1 increases. In this case, as shown in fig. 3, as a result of the arrangement in which the regions (A) of higher sound pressure and the regions (B) of lower sound pressure are alternately present, a force for sucking a fluid toward the channel 1 is generated at end portions of the reflector 2 and the vibrating plate 3a that form a side surface of the channel 1 on the side parallel to the direction in which the height of the channel 1 increases. As a result, air is sucked into the channel 1 not only through the inlet 1a but also through this side surface to transfer air toward the outlet 1b. This realizes travel of air at a higher flow rate.

As discussed above, in the first embodiment, the vibrating plate 3a is arranged so that the distance from the reflector 2 gradually increases in the direction from the inlet 1a toward the outlet 1b. Thus, the dimension of the channel 1 is easily made greater on the side of the outlet 1b than on the side of the inlet 1a, while the cross section is gradually changed along the channel 1. As a result, pressure loss is reduced to cause a fluid to travel more effectively.

In the fluid transfer device 100 according to the first embodiment, the tilt angle θ between the vibrating plate 3a and the reflector 2 is set at about 2 degrees. This angle θ may be suitably changed according to the shapes of the reflector 2 and the vibrating plate 3a, or to resonant frequencies, in a preferable range of about 0.1 degree to about 5 degrees. Further, the distance between the reflector 2 and the vibrating plate 3a preferably falls within a range of about 0.1mm to about 5mm.

In the fluid transfer device 100 according to the first embodiment, the reflector 2 and the vibrating plate 3a are tilted with respect to each other so that the height of channel 1 gradually increases in the direction from the inlet 1a toward the outlet 1b. Accordingly, an acoustic wave travels in the channel 1 from the inlet 1a toward the outlet 1b while being reflected between the reflector 2 and the vibrating plate 3a. This realizes more efficient use of acoustic streaming, leading to more efficient travel of air.

In the fluid transfer device 100 according to the first embodiment, the vibrating plate 3a is supported at an end side of the vibrating plate 3a at which a node is formed when the vibrating plate 3a vibrates in a mode of stripes. Thus, the vibration damping of the vibrating plate 3a is unlikely to occur, thereby realizing efficient travel of air.

### First Exemplary Configuration of Fuel Cell

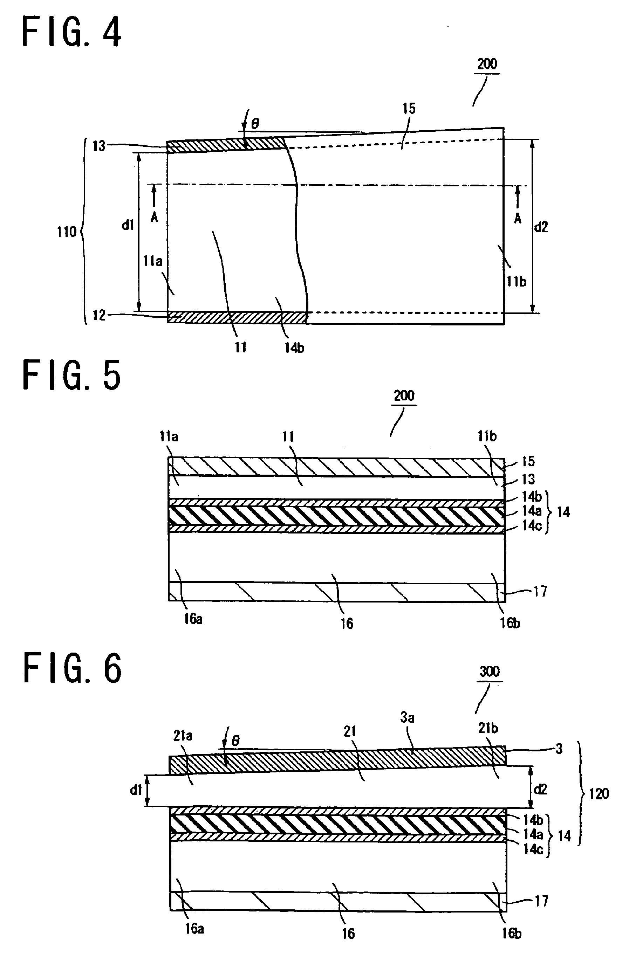

Fig. 4 shows a first exemplary configuration of a fuel cell with the fluid transfer device according to the first embodiment of the present invention. Fig. 5 is a sectional view of the fuel cell of Fig. 4 when taken in the direction indicated by arrows A. With reference to Figs. 4 and 5, the structure of a fuel cell 200 according to the first exemplary configuration of the first embodiment of the present invention is discussed below.

The fuel cell 200 of the first exemplary configuration comprises an MEA 14 including an electrolytic membrane 14a containing Nafion and the like, and a cathode 14b and an anode 14c formed of a metal material with a mesh or porous structure and the like that are respectively arranged on upper and lower surfaces of the electrolytic membrane 14a. The fuel cell 200 is not limited to the form of a stack in which a plurality of MEAs 14 are stacked, but may also preferably be in the form of a planer module in which these MEAs 14 are arranged on a plane. There are provided on the upper surface of the cathode 14b a reflector 12 and a vibrating plate 13 containing a resin material and the like such as ABS resin or polycarbonate resin. The reflector 12 and the vibrating plate 13 are arranged so that the direction in which they are facing each other is parallel to the upper surface of the MEA 14, thereby defining a first channel 11. A top plate 15 containing a resin material and the like such as ABS resin or polycarbonate resin is provided to cover the cathode 14b, the reflector 12 and the vibrating plate 13. The vibrating plate 13 has the same structure as that of the vibrating body used in the fluid transfer device 100 according to the first embodiment. But a PZT element is not shown in Fig. 4. The reflector 12 and the vibrating plate 13 are tilted with respect to each other at an angle θ to define a distance d1 and a distance d2 respectively on the side of an inlet 11a and on the side of an outlet 11b.

A bottom plate 17 containing a resin material and the like such as ABS resin or polycarbonate resin is arranged under the lower surface of the MEA 14, thereby defining a second channel 16 with an inlet 16a and an outlet 16b. The MEA 14 and the bottom plate 17 are fixed by respective support members not shown. The fuel cell 200 of the first exemplary configuration according to the first embodiment of the present invention is configured in this manner.

In the fuel cell 200 of the first exemplary configuration, the reflector 12 and the vibrating plate 13 arranged on the side of the cathode of the MEA 14 constitute a fluid transfer device 110 according to the first embodiment. Thus, an oxidizing fluid such as air or oxygen to travel along the channel 1 can be sucked in through the inlet 11a, while being discharged through the outlet 11b.

An oxidizing fluid is supplied to the first channel 11 while a fuel fluid such as hydrogen or methanol is supplied by a structure not shown through the inlet 16a to travel in the second channel 16. This generates electrochemical reaction of the oxidizing fluid and the fuel fluid in the MEA 14, thereby taking electricity out of the cathode 14b and the anode 14c to the outside.

As discussed above, the fuel cell of the first exemplary configuration comprises the fluid transfer device 110 of the first embodiment. This easily realizes the size reduction of the device configuration and efficient travel of oxidizing fluid. Even with a small capacity of the channel 11, efficient travel of an oxidizing fluid is realized at a high flow rate. As a result, a compact fuel cell capable of efficiently providing high electric power generation is obtained.

As discussed above, in the fuel cell of the first exemplary configuration, the reflector 12 and the vibrating plate 13 of the fluid transfer device 110 are arranged over the MEA 14 to face each other in the direction parallel to the upper surface of the MEA 14. According to this configuration, since sound pressure in the channel can be controlled by the distance between the vibrating plate 13 and the reflector 12, the dimension of the channel in the direction perpendicular to the upper surface of the MEA 14, namely, the height of the first channel 11 in the direction of the thickness of the MEA 14 can be arbitrarily changed. This allows the reduction in height of the channel in the direction of the thickness of the MEA 14, leading to the reduction in thickness of the fluid transfer device 110. As a result, the size reduction of the fuel cell 200 can be realized.

### Second Exemplary Configuration of Fuel Cell

Fig. 6 shows a second exemplary configuration of a fuel cell with the fluid transfer device according to the first embodiment of the present invention. With reference to Fig. 6, the structure of a fuel cell 300 according to the second exemplary configuration is discussed below. In Fig. 6, those parts corresponding to the components of Figs. 2 and 5 are designated by the same reference numerals, and are not discussed here.

In the fuel cell 300 of the second exemplary configuration according to the first embodiment of the present invention, a vibrating body is arranged over the MEA 14 to face the MEA 14, in a way that the vibrating body is tilted at an angle θ with respect to the MEA 14 to define a channel 21. The distances d1 and d2 are defined between the vibrating body and the MEA 14 respectively on the side of an inlet 21a and an outlet 21b. The vibrating body has the same structure as that of the vibrating body used in the fluid transfer device 100 of the first embodiment. But the PZT element is not shown In Fig. 6.

In the fuel cell 300 of the second exemplary configuration, an acoustic wave generated in the vibrating plate 3a by the excitation of the vibrating body 3 is reflected by the MEA 14. Thus, the vibrating body 3 and the MEA 14 used in place of a reflector constitute a fluid transfer device 120. This realizes travel of an oxidizing fluid in the channel 21 in the direction in which the distance between the vibrating body 3 and the MEA 14 increases.

Like in the fuel cell 200 of the first exemplary configuration, a fuel fluid is supplied through the second channel 16 to the lower surface of the MEA 14. This realizes electrochemical reaction of an oxidizing fluid and a fuel fluid in the MEA 14, thereby taking electricity out of the cathode 14b and the anode 14c to the outside.

In the second exemplary configuration, the MEA 14 is used in place of a reflector, and space (channel 21) between the vibrating body and the MEA 14 is applied as a channel. This provides simpler configuration and ease of size reduction of the fuel cell 300.

In the second exemplary configuration, as a result of the action of an acoustic wave on the surface of the MEA 14, CO₂ and H₂O generated by the above-discussed electrochemical reaction are hard to stick to the surface of the MEA 14. This suppresses reduction in the output of the fuel cell 300.

In the above-discussed first embodiment, the excitation of the vibrating body is realized by the excitation of the PZT element 3b serving as a vibration application part attached to the vibrating plate 3a that is a non-piezoelectric material. Alternatively, in the present invention, an elastic plate may be caused to vibrate directly that is formed of a piezoelectric material such as piezoelectric ceramics including PZT, lithium tantalate (LiTaO₃), lithium niobate (LiNbO₃), lithium tetraborate (Li₂B₄O₇) and the like, or crystal. In this case, the excitation of the elastic plate formed of a piezoelectric material is realized directly by applying a voltage in a polarization direction of the piezoelectric material. Still alternatively, like in a SAW device adapted for use as a high-frequency filter and the like, a pair of interdigitated electrodes may be formed on a surface of an elastic plate formed of a piezoelectric material. By the formation of electrodes on a surface of a piezoelectric material, a surface acoustic wave is generated on the surface of the piezoelectric material.

In the above-discussed fluid transfer device according to the first embodiment, the reflector 2 and the vibrating plate 3a are both in the form of a flat plate, and the vibrating plate 3a is tilted at the angle θ with respect to the reflector 2. Alternatively, in the present invention, for example at least either the reflector 2 or the vibrating plate 3a may be of a stepped shape.

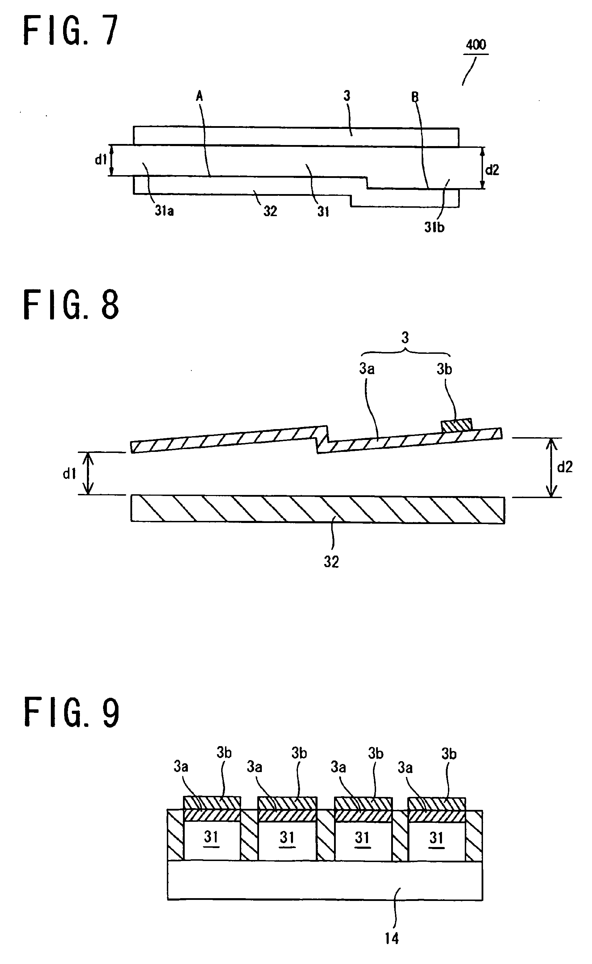

Fig. 7 shows the structure of a modification of the fluid transfer device according to the first embodiment of the present invention. With reference to Fig. 7, the structure of a modification of the fluid transfer device according to the first embodiment of the present invention is discussed below. In Fig. 7, those parts corresponding to the components of Fig. 2 are designated by the same reference numerals, and are not discussed here. The vibrating body 3 has the same structure as that of the vibrating body used in the fluid transfer device 100 according to the first embodiment. But the PZT element is not shown in Fig. 7.

In a fluid transfer device 400 shown in Fig. 7, a reflector 32 has a stepped shape, and planes A and B forming the step are each arranged in parallel with and facing a vibrating body, in a way that the respective distances d1 and d2 are defined between the planes A, B and the vibrating body. Then, a channel 31 is defined between the reflector 32 and the vibrating body 3 that has the height d1 on the side of an inlet 31a and the height d2 on the side of an outlet 31b.

Like in the fluid transfer device according to the first embodiment, also in the fluid transfer device 400, acoustic streaming is formed in the channel 31 by the excitation of the vibrating body 3. Further, pressure loss is lower on the side of the outlet 31b than on the side of the inlet 31a. Thus, a fluid can be supplied in the channel 31 in the direction from the inlet 31a toward the outlet 31b.

In the discussion given above, the reflector 32 is shown to have a stepped shape. Alternatively, in the present invention, the vibrating plate 3a may be of a stepped shape as shown in Fig. 8. Still alternatively, both the vibrating plate and the reflector may be of a stepped shape, as long as the distance therebetween is greater on the side of the exit than on the side of the entrance of the channel. Still alternatively, this stepped shape may include a plurality of steps.

In the first embodiment discussed above, the vibrating plate is caused to vibrate in a mode of vibration (mode of stripes) that generates resonance in the direction in which the height of the channel 1 increases. Alternatively, in the present invention, as long as a sound pressure gradient is formed from one side to the other side of the channel 1, the vibrating plate may vibrate in any mode.

In the first embodiment discussed above, air is caused to travel along the channel 1. The present invention may also realize travel of other gases or liquids. Further, a solid such as a powder can also be caused to travel by being dispersed into a fluid.

In the above-discussed first and second exemplary configurations of the fuel cell according to the first embodiment, the fluid transfer devices 110 and 120 are intended to supply an oxidizing fluid to the MEA 14 on the side of the cathode 14b. Alternatively, in the present invention, the first and second exemplary configurations may be used to supply a fuel fluid to the MEA 14 on the side of the anode 14c. Still alternatively, the first and second exemplary configurations may be used to supply both fluids to the MEA 14 on respective sides.

In the above-discussed first and second exemplary configurations of the fuel cell according to the first embodiment, one fluid transfer device 110 or 120 is provided in corresponding relationship with the MEA 14. Alternatively, in the present invention, a plurality of fluid transfer devices may be provided to one MEA 14 as shown in Fig. 9. When a plurality of fluid transfer devices are arranged in parallel to define a plurality of channels 31, the flow rate in the direction along the plane of the upper surface or lower surface of the MEA 14 can be controlled. Thus, unevenness in electric power generation in the direction of the plane of the MEA 14 is suppressed. When a plurality of fluid transfer devices are arranged in series along one channel, a fluid can be caused to travel at a sufficient flow rate even with a great length of the channel 1.

### (Second Embodiment)

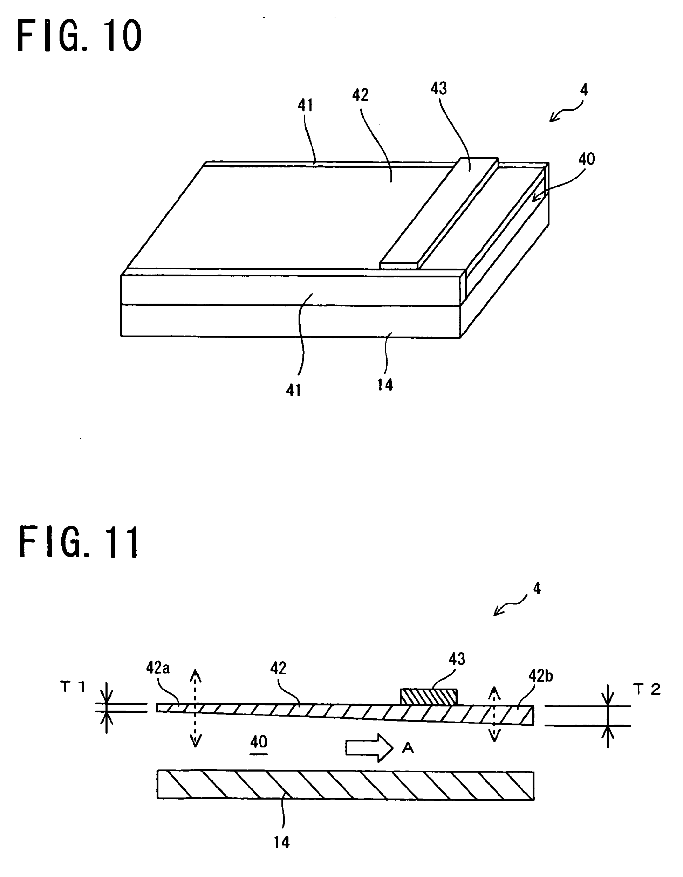

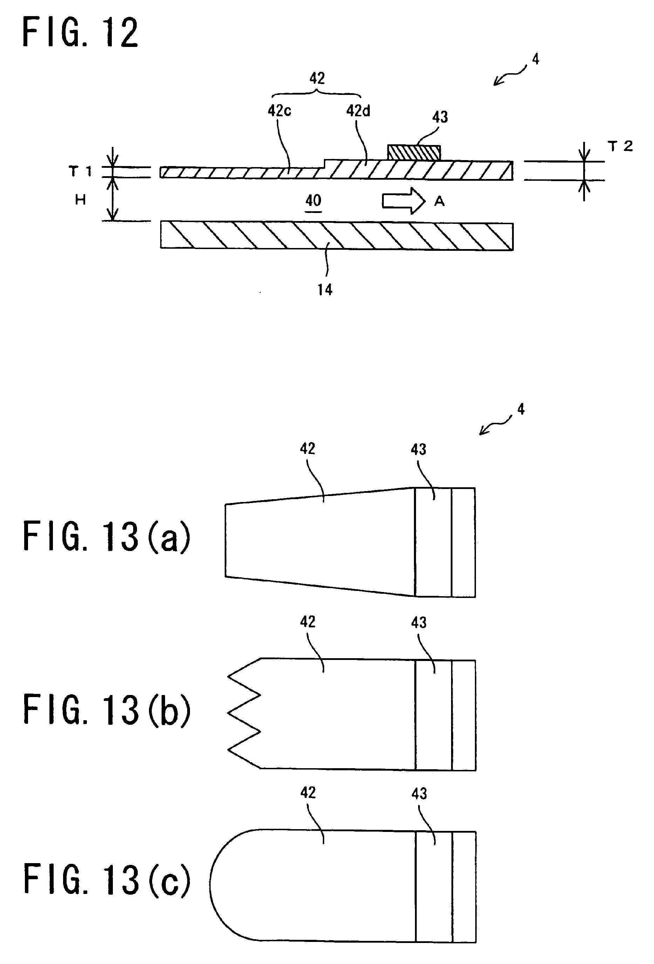

Fig. 10 shows a first exemplary configuration of a fuel cell provided with a fluid transfer device according to a second embodiment of the present invention. In this fuel cell, a fluid transfer device 4 serves to generate air flow along a surface of the MEA 14 based on the principles of acoustic streaming. In the first exemplary configuration, the channel 40 of air is formed along the surface of the MEA 14 as shown in Figs. 11 and 12.

As shown in Fig. 10, a pair of channel walls 41, 41 extending along the channel 40 are provided on opposite sides of the channel 40 in upright positions with respect to the surface of the MEA 14. A vibrating plate 42 is provided to straddle the channel walls 41, 41 to cover the channel 40. A piezoelectric vibrating body 43 is provided on the upper surface of the vibrating plate 42. A configuration shown in Fig. 11 is thereby formed in which the vibrating plate 42 and the surface of the MEA 14 face each other with a distance therebetween, and an acoustic wave generated by the vibration of the vibrating plate 42 is reflected in the channel 40 defined between the surface of the MEA 14 and the vibrating body 42.

The vibrating plate 42 has a cuneal shape in cross section with a minimum thickness T1 at an end portion 42a (left end portion in Fig. 11) on the side of the entrance of the channel 40, and a maximum thickness T2 at an end portion 42b (right end portion in Fig. 11) on the side of the exit of the channel 40.

In this fluid transfer device 4, the distance between the vibrating plate 42 and the surface of the MEA 14 is set at a height of resonance (for example in a range of 0.1 to 5mm) at which air column resonance is generated. An ultrasonic standing wave is generated in the vibrating plate 42 by the piezoelectric vibrating body 43 to generate air column resonance between the vibrating plate 42 and the surface of the MEA 14. The vibrating plate 42 has a smaller thickness on the side of the entrance of the channel 40 and thus has lower bending stiffness thereat while having a greater thickness on the side of the exit of the channel 40 and thus has higher bending stiffness thereat. As a result, as indicated by arrows with dashed lines in the figure, the vibrating body 42 vibrates with greater amplitude on the side of the entrance of the channel 40, while vibrating with smaller amplitude on the side of the exit of the channel 40. This makes sound pressure in the channel 40 high on the side of the entrance, and low on the side of the exit.

A sound pressure gradient is thereby formed in which sound pressure decreases in the direction from the entrance toward the exit of the channel 40. This generates acoustic streaming in the channel 40 from the entrance toward the exit to generate uniform air flow in the channel 40 from the entrance toward the exit. As a result, air is supplied to the MEA 14 to generate electricity in the MEA 14.

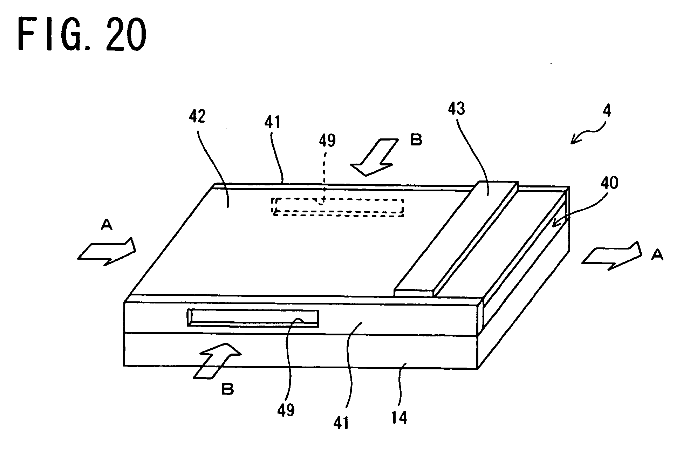

In the fuel cell of the first exemplary configuration shown in Fig. 10, the channel walls 41, 41 may respectively be provided with second entrances 49, 49 as shown in Fig. 20. This enables a fluid to be sucked in also through the sides of the channel 40 as indicated by arrows B.

Fig. 12 shows a fuel cell of a second exemplary configuration. As shown in Fig. 12, in the fluid transfer device 4 provided in this fuel cell, the channel 40 is formed along a surface of the MEA 14. The vibrating plate 42 provided to cover the channel 40 has a section 42c in the form of a thin plate with a smaller thickness T1 on the side of the entrance of the channel 40, and a section 42d in the form of a thick plate with a larger thickness T2 on the side of the exit of the channel 40.

Like in the first exemplary configuration, in this second exemplary configuration, the vibrating plate 42 is also actuated by the piezoelectric vibrating body 43 to vibrate with greater amplitude on the side of the entrance of the channel 40 while vibrating with smaller amplitude on the side of the exit of the channel 40. A sound pressure gradient is thereby formed in which sound pressure decreases in the direction from the entrance toward the exit of the channel 40. This generates acoustic streaming in the channel 40 from the entrance toward the exit to generate uniform air flow in the channel 40 from the entrance toward the exit.

Figs. 13(a), (b) and (c) each show a fluid transfer device provided in a fuel cell of a third exemplary configuration. As shown in Figs. 13(a), (b) and (c), in this fluid transfer device, the vibrating plate 42 is changed in shape in plan view along the channel to thereby realize lower bending stiffness on the side of the entrance of the channel (left side of Fig. 6), and higher bending stiffness on the side of the exit of the channel (right side of Fig. 6). In this configuration, acoustic streaming is also generated in the channel from the entrance toward the exit to generate uniform air flow in the channel from the entrance toward the exit.

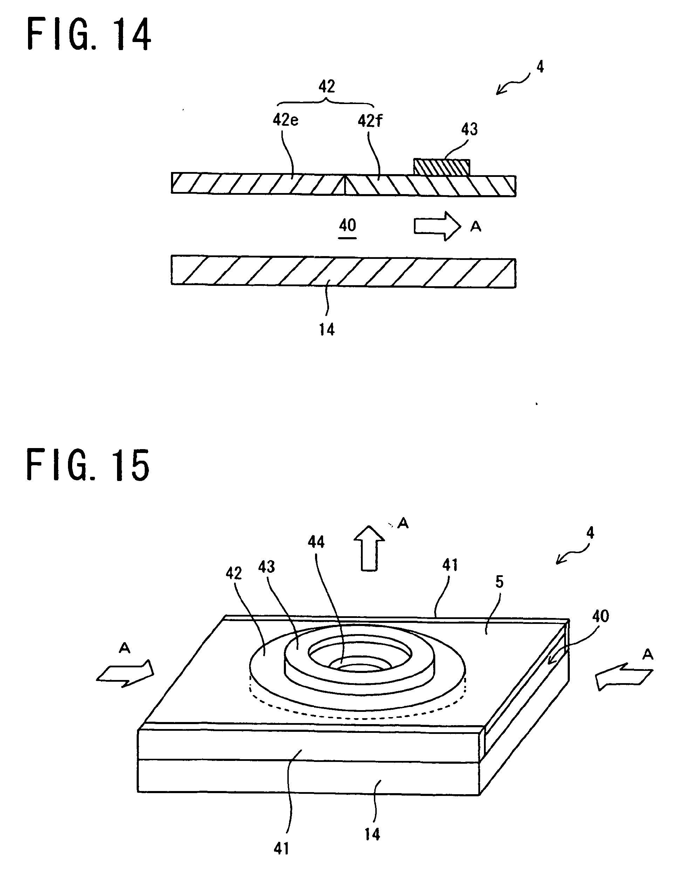

Fig. 14 shows a fluid transfer device provided in a fuel cell of a fourth exemplary configuration. As shown in Fig. 14, the channel 40 of air is formed along a surface of the MEA 14, and the vibrating plate 42 is provided to cover the channel 40. The vibrating plate 42 has a first vibrating plate section 42e formed of a material with a lower modulus of elasticity arranged on the side of the entrance of the channel 40, and a second vibrating plate section 42f formed of a material with a higher modulus of elasticity arranged on the side of the exit of the channel 40.

In this configuration, the vibrating plate 42 has a lower modulus of elasticity on the side of the entrance of the channel 40 and thus has lower bending stiffness thereat while having a higher modulus of elasticity on the side of the exit and thus has higher bending stiffness thereat. This causes the vibrating plate 42 to vibrate with greater amplitude on the side of the entrance of the channel 40, while being caused to vibrate with smaller amplitude on the side of the exit of the channel 40, thereby making sound pressure high on the side of the entrance and low on the side of the exit. As a result, acoustic streaming is generated in the channel 40 from the entrance toward the exit to generate uniform air flow in the channel 40 from the entrance toward the exit as indicated by arrow A in the figure.

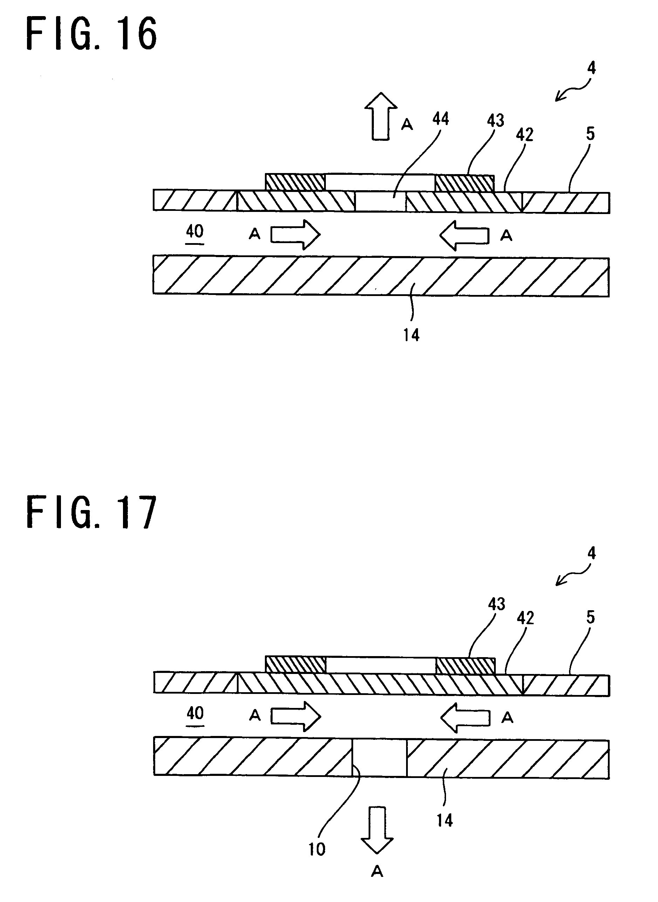

Figs. 15 and 16 show a fluid transfer device provided in a fuel cell of a fifth exemplary configuration. As shown in these figures, in the fluid transfer device 4, the channel 40 is formed along a surface of the MEA 14, the pair of channel walls 41, 41 are provided on opposite sides of the channel 40 in upright positions, and a cover 5 is provided to straddle the channel walls 41, 41 to cover the channel 40. The vibrating plate 42 in the form of a circle and having a central opening 44 is arranged at the center of the cover 5. The ring-shaped piezoelectric vibrating body 43 that surrounds the central opening 44 is provided on a surface of the vibrating plate 42.

In this fluid transfer device 4, the vibrating plate 42 is formed into a disc and accordingly has lower bending stiffness at the periphery than that at the center. Thus, by the actuation of the piezoelectric vibrating body 43, vibration with greater amplitude is generated at the periphery of the vibrating plate 42 while vibration with smaller amplitude is generated at the center. As a result, a sound pressure gradient is formed in the channel 40 in which sound pressure decreases in the direction from the periphery toward the center. This generates acoustic streaming from the entrance toward the exit. At the same time, as indicated by arrows A in the figures, air is introduced through openings on opposite sides of the cover 5 serving as entrances, and is then discharged to the outside through the central opening 44 of the vibrating plate 42 serving as an exit to the outside.

Another configuration shown in Fig. 17 is also applicable in which the MEA 14 is given a central opening 10 (sixth exemplary configuration). In this configuration, air is introduced through openings on opposite sides of the cover 5, and is discharged through the central opening 10 of the MEA 14 to the outside.

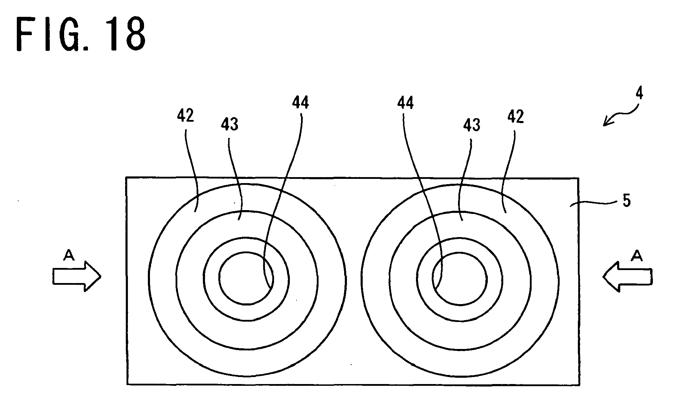

Still another configuration shown in Fig. 18 is applicable in which the vibrating plates 42 and the piezoelectric vibrating bodies 43 shown in Fig. 16 are respectively provided at two positions on the cover 5 (seventh exemplary configuration). In this configuration, air is introduced through openings on opposite sides of the cover 5, and is discharged through the respective central openings 44, 44 of vibrating plates 42, 42.

In order to prove the effect of the fluid transfer device according to the second embodiment of the present invention, there have been built a prototype of the fluid transfer device of the second exemplary configuration shown in Fig. 12 (hereinafter referred to as an example of the present invention), and a prototype of a fluid transfer device with the same configuration as that of the example of the present invention except for a uniform thickness of a vibrating plate (hereinafter referred to as an example of comparison). Then, the air flow containing lycopodium powder has been observed. In the example of comparison, an aluminum plate (A5052) with a width of 30mm, a length of 30mm and a thickness of 1mm is used as a vibrating plate, a PZT element ("C203" produced by Fuji Ceramics Corporation) with a width of 7mm, a length of 30mm and a thickness of 1mm is used as the piezoelectric vibrating body 43, and an acrylic plate with a width of 30mm, a length of 30mm and a thickness of 1mm is used as a reflector. In the example of the present invention, the section 42c in the form of a thin plate of the vibrating plate 42 has a thickness of 0.5mm, and the section 42d in the form of a thick plate has a thickness of 1.0mm. Further, the channel 40 has a height H of 0.5mm, and the piezoelectric vibrating body 43 was caused to vibrate at a frequency of about 36kHz.

In the example of comparison, while lycopodium powder moves before and after the application of a voltage to the piezoelectric vibrating body 43, air does not flow uniformly and it is difficult to control the direction of air flow. In contrast, in the example of the present invention, it has been found that lycopodium powder uniformly travels from the entrance toward the exit of the channel 40 before and after the application of a voltage to the piezoelectric vibrating body 43, making the control in the flow direction easy.

The amounts of displacement have been measured that are obtained by the vibration of the respective vibrating plates of the example of the present invention and the example of comparison, and distributions of the amounts of displacement of both vibrating plates have been compared. As for the vibrating plate in the example of comparison, an aluminum plate (A5052) with a width of 30mm, a length of 20mm and a thickness of 1mm has been employed. The same aluminum plate (A5052) is also used as the vibrating plate in the example of the present invention, except that this aluminum plate has a thickness of 1mm at the section in the form of a thick plate, a thickness of 0.5mm at the section in the form of a thin plate, and the thickness change from 1mm to 0.5mm occurs at a point of 10mm in the length direction. Further the piezoelectric vibrating body 43 was caused to vibrate at a frequency of about 36kHz.

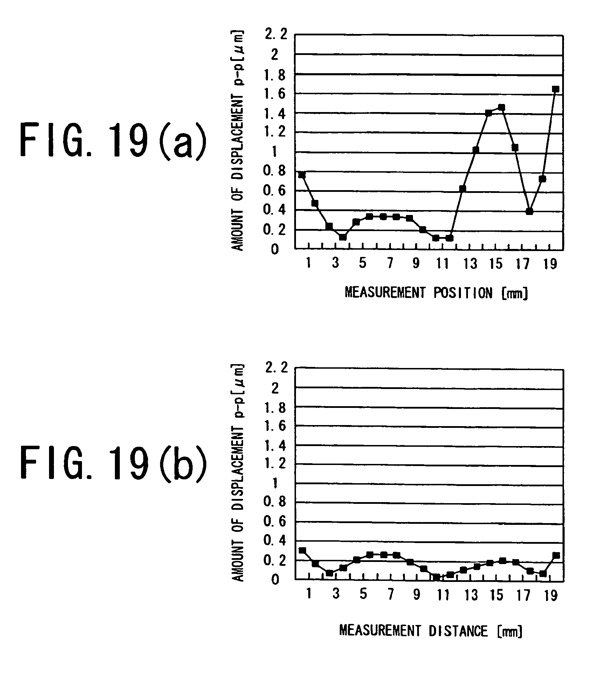

The results are that, with regard to the vibrating plate of the example of the present invention, a large difference of about 1.1µm is generated in the amount of displacement between the section in the form of a thick plate and the section in the form of a thin plate as shown in Fig. 19(a). In contrast, with regard to the vibrating plate of the example of comparison, differences in the amount of displacement in the length direction are as small as about 0.05µm as shown in Fig. 19(b). In Figs. 19, each horizontal axis indicates positions in the length direction, and each vertical axis indicates the amounts of displacement in the width direction of the vibrating plate measured at positions in the length direction. Especially with regard to the horizontal axis of Fig. 19 (a), positions are taken with respect to an end of the section of the vibrating plate with a greater thickness. Then, it is proved that, in the fluid transfer device 4 shown in Fig. 12, high sound pressure is generated by the large vibration of the section 42c in the form of a thin plate of the vibrating plate 42, thereby allowing the formation of a sufficient sound pressure gradient in the channel 40. It is considered that the other exemplary configurations produce the same effect.

As discussed above, in the fuel cell with the fluid transfer device according to the second embodiment of the present invention, the fluid transfer device 4 has a structure to serve to cause air in the channel 40 that extends along the MEA 14 to travel based on the principles of acoustic streaming. Therefore, a fluid supply mechanism as an external device to be connected to the channel 40 is not required, thus the fluid transfer device 4 is of a simple configuration in which the channel 40 itself is defined by the vibrating plate 42 and a reflection wall, and the piezoelectric vibrating body 43 is arranged on the vibrating plate 42. Thus, the fluid transfer device 4 is capable of realizing reduction in size and power consumption, and can be suitably applied as a fluid transfer device of a fuel cell for use in a compact electronic apparatus.

Especially in the configuration of the fuel cell adopting the fluid transfer device according to the second embodiment of the present invention, an acoustic wave generated by the vibration of the vibrating plate 42 acts on a surface wall of the MEA 14. Thus, water deposited on a surface of the cathode 14b, or carbon dioxide deposited on a surface of the anode 14c can spread out into the channel 40. This enhances the performance of the fuel cell.

### (Third Embodiment)

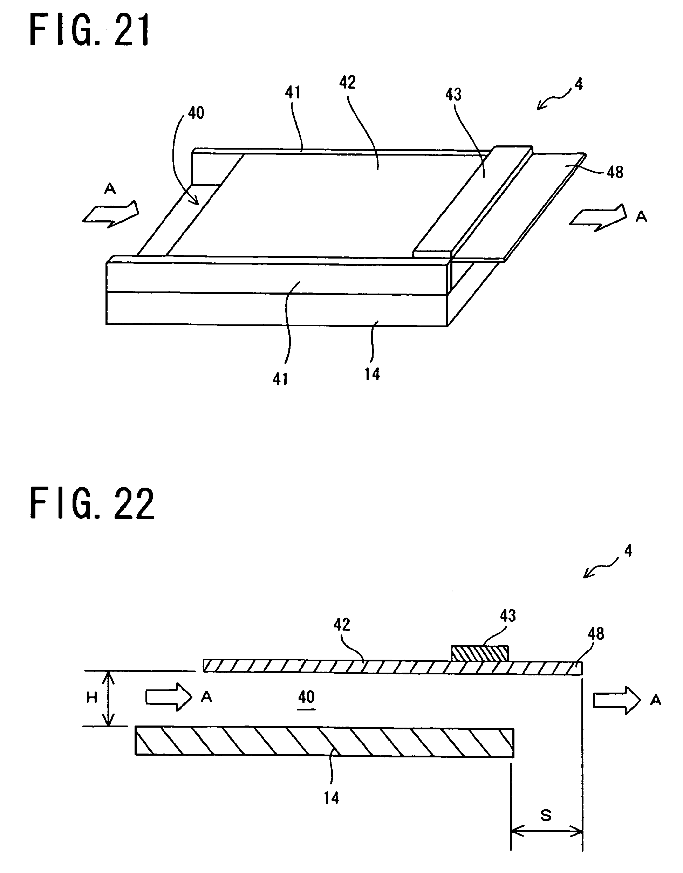

Fig. 21 shows a first exemplary configuration of a fuel cell with a fluid transfer device according to a third embodiment of the present invention. In this fuel cell, the fluid transfer device 4 serves to generate air flow along a surface of the MEA 14 based on the principles of acoustic streaming. In the first exemplary configuration, the channel 40 of air is formed along a surface of the MEA 14 as shown in figs. 21 and 22. The pair of channel walls 41, 41 extending along the channel 40 are provided on opposite sides of the channel 40 in upright positions with respect to the surface of the MEA 14, while the vibrating plate 42 is provided to straddle the channel walls 41, 41 to cover the channel 40. The piezoelectric vibrating body 43 is provided on the upper surface of the vibrating plate 42.

A configuration shown in Fig. 22 is thereby formed in which the vibrating plate 42 and the surface of the MEA 14 face each other with a predetermined distance H therebetween, and an acoustic wave generated by the vibration of the vibrating plate 42 is reflected in the channel 40 defined between the surface of the MEA 14 and the vibrating body 42. The vibrating plate 42 has a region 48 defined on the side of the exit of the channel 40 (right side of Fig. 22) that projects outwards (rightwards in Fig. 22) from the MEA 14 by a certain distance S so that the region 48 does not face the surface of the MEA 14.

In this fluid transfer device 4, the distance H between the vibrating plate 42 and the MEA 14 is set at a height of resonance (for example in a range of 0.1 to 5mm) at which air column resonance is generated, and an ultrasonic standing wave is generated in the vibrating plate 42 by the piezoelectric vibrating body 43, thereby generating air column resonance between the vibrating plate 42 and the surface of the MEA 14.

The distance S of projection of the end region 48 of the vibrating plate 42 is set at a suitable distance that is for example about half the wavelength of a standing wave generated in the vibrating plate 42 (for example, in a range of 0.5 to 5mm) . This generates a sound pressure gradient in which sound pressure decreases in the direction from the entrance toward the exit of the channel 40. Acoustic streaming is thereby formed in the channel 40 from the entrance toward the exit to generate uniform air flow in the channel 40 from the entrance toward the exit as indicated by arrows A. As a result, air is supplied to the MEA 14 to generate electricity in the MEA 14.

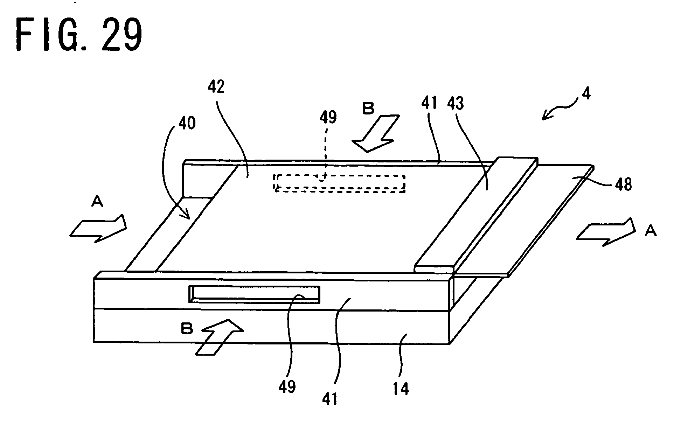

In the fluid transfer device 4 of the first exemplary configuration shown in Fig. 21, the channel walls 41, 41 may respectively be provided with the second entrances 49, 49 as shown in Fig. 29. This enables a fluid to be sucked in also through the sides of the channel 40 as indicated by arrows B.

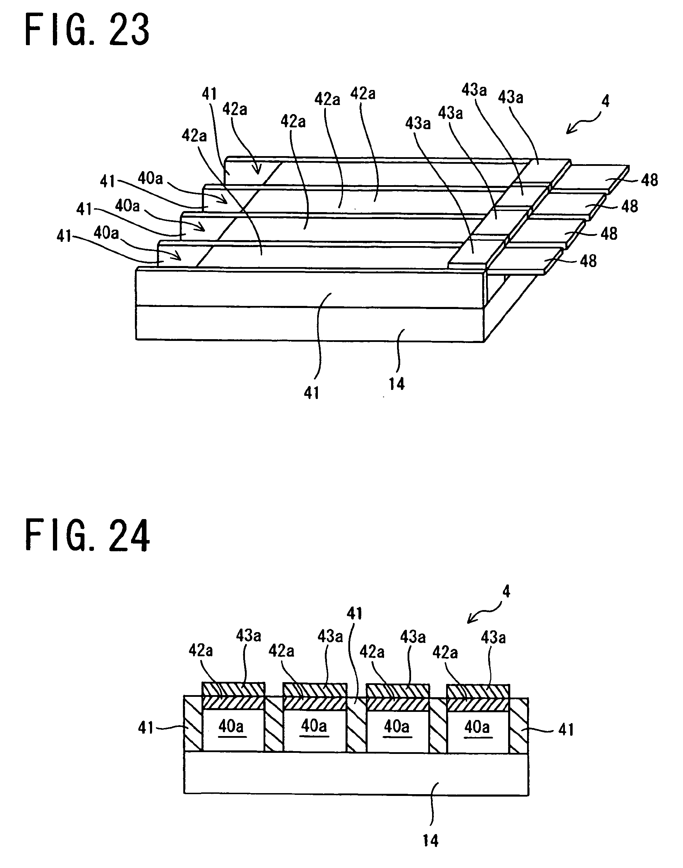

Figs. 23 and 24 show a second exemplary configuration of a fuel cell. As shown in these figures, in the fluid transfer device 4, channels 40a are formed on a surface of the MEA 14 that are arranged in parallel in several rows. These channels 40a are separated from each other by the channel walls 41 in upright positions with respect to the surface of the MEA 14. A plurality of vibrating plates 42a are provided to cover the corresponding channels 40a. Each vibrating plate 42a is given a piezoelectric vibrating body 43a. The vibrating plates 42a project outwards from the MEA 14 by a certain distance to respectively define the regions 48 that do not face the surface of the MEA 14.

Like in the first exemplary configuration, in this second exemplary configuration, ultrasonic standing waves are also generated in the vibrating plates 42a by the piezoelectric vibrating bodies 43a to generate acoustic streaming in each channel 40a from the entrance toward the exit. This generates uniform air flow in each channel 40a from the entrance toward the exit.

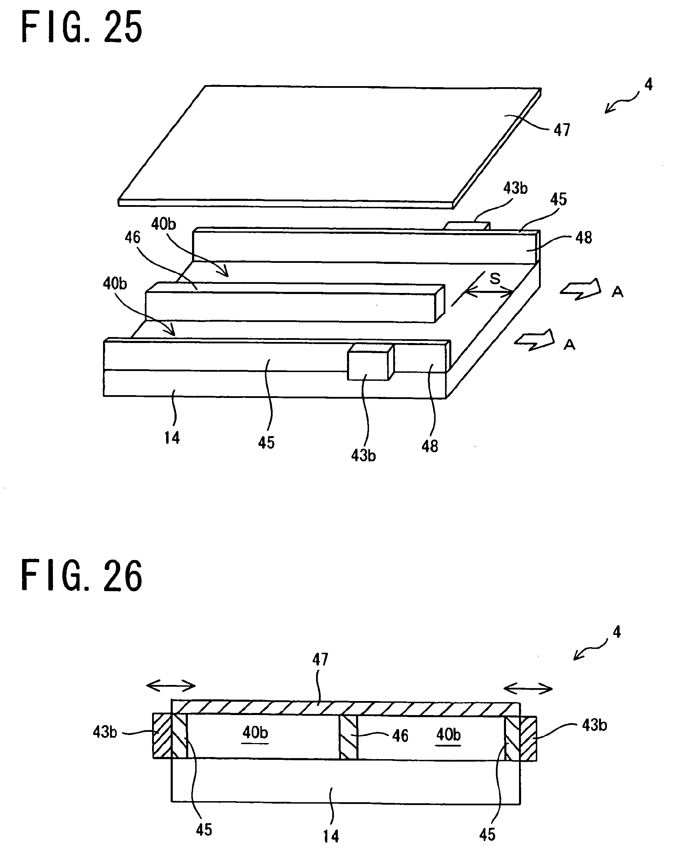

Figs. 25 and 26 show a third exemplary configuration of a fuel cell. As shown in these figures, two parallel channels 40b, 40b of air are formed that extend along a surface of the MEA 14. The channels 40b, 40b join into one at positions near the respective exits. The channels 40b, 40b are both covered by a cover 47 extending in parallel with the surface of the MEA 14. A pair of vibrating plates 45 extending in parallel with the cannels 40b, 40b are provided on opposite sides of the channels 40b, 40b in upright positions with respect to the surface of the MEA 14. Each vibrating plate 45 is given the piezoelectric vibrating body 43b.

A reflector 46 is provided between the channels 40b, 40b in upright position with respect to the surface of the MEA 14. The reflector 46 terminates near the exits of the channels, thereby causing each vibrating plate 45 to project by a certain distance S from the reflector 46. This defines the regions 48 that do not face the reflector 46. A configuration shown in Fig. 26 is thereby formed in which each vibrating plate 45 and the reflector 46 face each other with a certain distance therebetween, and an acoustic wave generated by the vibration of each vibrating plate 45 is reflected by the reflector 46.

In the above-discussed fluid transfer device 4, ultrasonic standing waves are generated in the vibrating plates 45, 45 by the piezoelectric vibrating bodies 43b, 43b. This generates air column resonance between each vibrating plate 45 and the reflector 46 to form acoustic streaming. At this time, a sound pressure gradient is formed in the channels 40b, 40b in which sound pressure decreases in the direction from the entrances toward the exits of the channels 40b, 40b. This generates uniform air flow in the channels 40b, 40b from the entrances toward the exits as indicated by arrows A. As a result, air is supplied to the MEA 14 to generate electricity in the MEA 14.

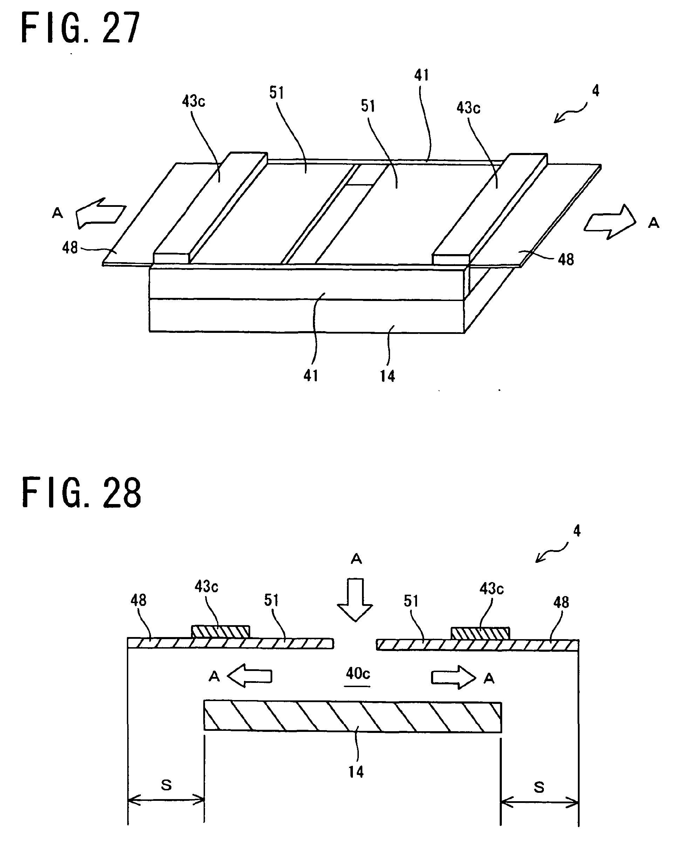

Figs. 27 and 28 show a fourth exemplary configuration of a fuel cell. As shown in these figures, in the fluid transfer device 4, a channel 40c of air is formed along a surface of the MEA 14. The pair of channel walls 41, 41 extending along the channel 40c are provided on opposite sides of the channel 40c in upright positions with respect to the surface of the MEA 14, while two vibrating plates 51, 51 are provided to straddle the channel walls 41, 41 to cover the channel 40c, while being spaced apart from each other. Piezoelectric vibrating bodies 43c are provided on the upper surface of each of the vibrating plates 51. In this configuration, the entrance of the channel 40c is defined between the vibrating plates 51, 51, and two exits of the channel 40c are defined at one end of the vibrating plates 51, 51.

The vibrating plates 51, 51 respectively have the regions 48 defined on the sides of the exits (left and right sides of Fig. 28) of the channel 40c that project outwards from the MEA 14 by a certain distance S so that the regions 48 do not face the surface of the MEA 14.

In the above-discussed fluid transfer device 4, ultrasonic standing waves are generated in the vibrating plates 51, 51 by the piezoelectric vibrating bodies 43c, 43c to generate air column resonance between each of the vibrating plates 51 and the surface of the MEA 14. By the presence of the regions 48 of the vibrating plates 51, 51 that do not face the surface of the MEA 14, a sound pressure gradient is generated in which sound pressure degreases in the direction from the entrance toward the both of the exits of the channel 40c. This generates acoustic streaming in the channel 40c from the entrance toward the both exits. Thus, air introduced through the entrance of the channel 40c is divided to generate uniform air flow toward the both exits as indicated by arrows A. As a result, air is supplied to the MEA 14 to generate electricity in the MEA 14.

To prove the effect of the fluid transfer device according to the third embodiment of the present invention, there have been built a prototype of the fluid transfer device of the first exemplary configuration shown in Figs. 21 and 22 (hereinafter referred to as an example of the present invention), and a prototype of a fluid transfer device with the same configuration as that of the example of the present invention except for the absence of the projection of the vibrating plate 42 from the MEA 14. Then, air flow containing lycopodium powder has been observed.

In the built prototypes of the fluid transfer device 4, an aluminum plate (A5052) with a width of 30mm, a length of 30mm and a thickness of 1mm is used as the vibrating plate 42, a PZT element ("C203" produced by Fuji Ceramics Corporation) with a width of 7mm, a length of 30mm and a thickness of 1mm is used as the piezoelectric vibrating body 43, and an acrylic plate with a width of 30mm, a length of 30mm and a thickness of 1mm is used as a reflector. The channel 40 has a height H of 0.5mm, and the end region 48 of the vibrating plate 42 has a distance S of projection set at 2.5mm. Further, the piezoelectric vibrating body 43 has been caused to vibrate at a frequency of about 34kHz.

In the example of comparison, while lycopodium powder moves before and after the application of a voltage to the piezoelectric vibrating body 43, air does not flow uniformly and it is difficult to control the direction of air flow. In contrast, in the example of the present invention, it has been found that lycopodium powder uniformly travels from the entrance toward the exit of the channel 40 before and after the application of a voltage to the piezoelectric vibrating body 43, making the control in the flow direction easy.

As discussed above, in the fuel cell with the fluid transfer device according to the third embodiment of the present invention, the fluid transfer device 4 has a structure to serve to transfer air in the channel 40 that is provided along the MEA 14 based on the principles of acoustic streaming. Therefore, a fluid supply mechanism as an external device to be connected to the channel 40 is not required, thus the fluid transfer device 4 is of a simple configuration in which the channel 40 itself is formed by the vibrating plate 42 and a reflection wall, and the piezoelectric vibrating body 43 is arranged on the vibrating plate 42. Thus, the fluid transfer device 4 is capable of realizing reduction in size and power consumption, and can be suitably applied as a fluid transfer device of a fuel cell for use in a compact electronic apparatus.

Especially in the configuration of the fuel cell adopting the fluid transfer device according to the present invention, the vibration of the vibrating plate 42 generates the vibration of a surface wall of the MEA 14. Thus, water deposited on a surface of the anode 14c, or carbon dioxide deposited on a surface of cathode 14b the can spread out into the channel 40. This enhances the performance of the fuel cell.

### (Fourth Embodiment)

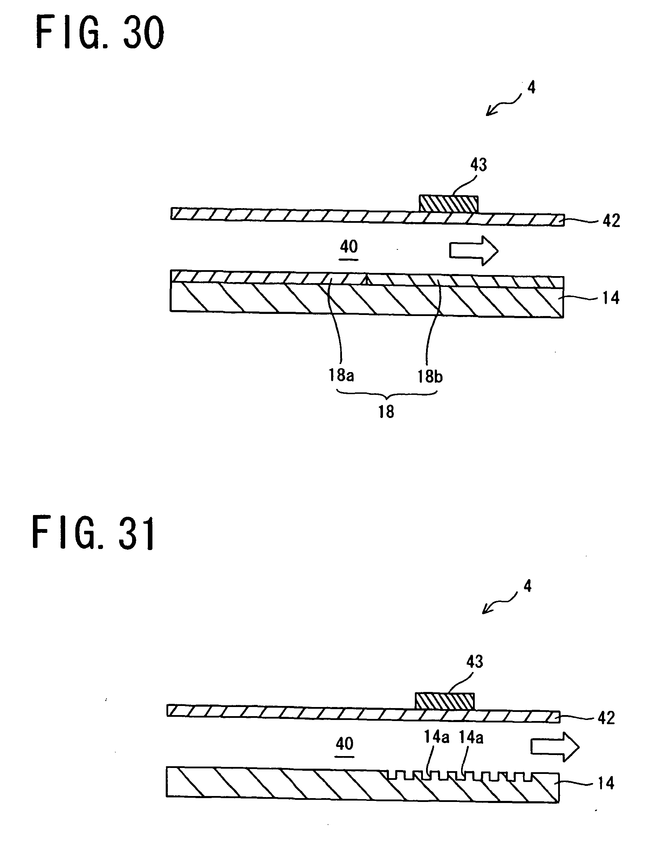

Fig. 30 shows a fuel cell with a fluid transfer device according to a fourth embodiment of the present invention. In this fluid transfer device 4, a surface wall 18 of the MEA 14 facing the vibrating plate 42 includes a wall section 18a defined on the side of the entrance of the channel 40 and formed of a material with a higher acoustic impedance, and a wall section 18b defined on the side of the exit of this channel and formed of a material with a lower acoustic impedance. Here, an acoustic impedance is defined by the product of the mass of the reflection wall and sound velocity.

In the fluid transfer device 4 according to the fourth embodiment, the surface wall 18 of the MEA 14 responsible for the reflection of an acoustic wave has a higher acoustic impedance on the side of the entrance of the channel 40, and a lower acoustic impedance on the side of the exit of this channel 40. This generates higher sound pressure on the side of the entrance of the channel 40 and lower sound pressure on the side of the exit of the channel 40. As a result, a sound pressure gradient is formed in which sound pressure decreases in the direction from the entrance toward the exit of the channel 40. Thus, acoustic streaming is generated in the channel 40 from the entrance toward the exit to cause a fluid to flow in the channel 40 from the entrance toward the exit.

### (Fifth Embodiment)

Fig. 31 shows a fuel cell with a fluid transfer device according to a fifth embodiment of the present invention. In this fluid transfer device 4, the surface wall of the MEA 14 facing the vibrating plate 42 has a plurality of recesses 14a in a region on the side of the exit of the channel 40. Accordingly, the surface wall of the MEA 14 to serve as a reflection wall has a lower acoustic absorption coefficient on the side of the entrance of the channel 40, and a higher acoustic absorption coefficient on the side of the exit of the channel 40.

In the fluid transfer device 4 according to the fifth embodiment, a surface of the surface wall 18 of the MEA 14 responsible for the reflection of an acoustic wave has a lower acoustic absorption coefficient on the side of the entrance of the channel 40, and a higher acoustic absorption coefficient on the side of the exit of the channel 40. Thus, the strength of a reflected wave is higher on the side of the entrance of the channel 40, and is lower on the side of the exit of the channel 40. As a result, a sound pressure gradient is formed in which sound pressure decreases in the direction from the entrance toward the exit of the channel 40. Thus, acoustic streaming is generated in the channel 40 from the entrance toward the exit to cause a fluid to flow in the channel 40 from the entrance toward the exit.

### (Support Structure for Vibrating Plate)

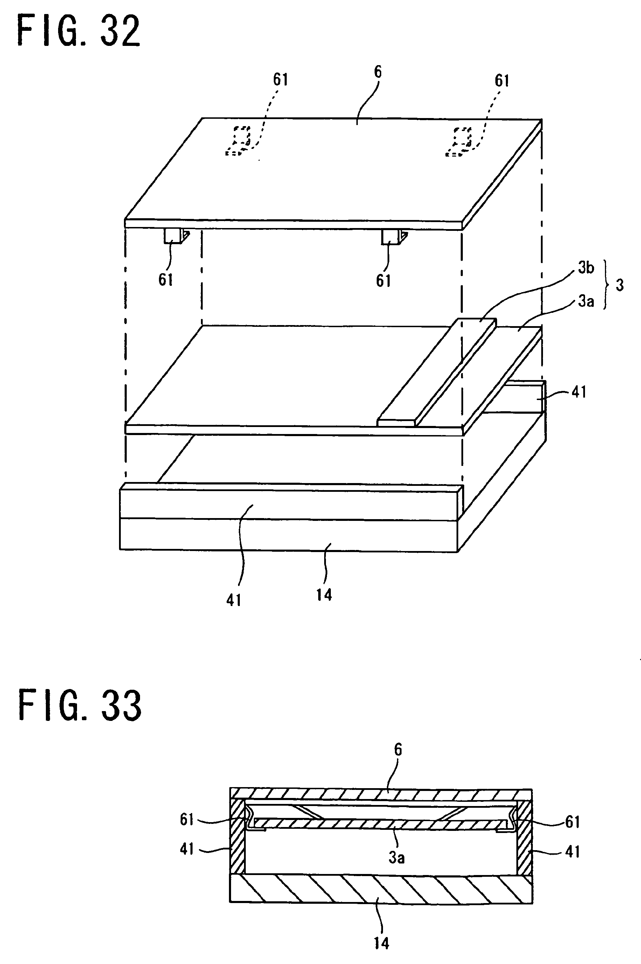

Figs. 32 and 33 show a support structure for the vibrating plate in the fluid transfer device according to each of the embodiments discussed above. As shown in these figures, the pair of channel walls 41, 41 are provided in upright positions on opposite sides of the MEA 14. A cover 6 is arranged straddling the channel walls 41, 41. The cover 6 has a rear surface provided with four support members 61 in the form of a hook that support the vibrating plate 3a.

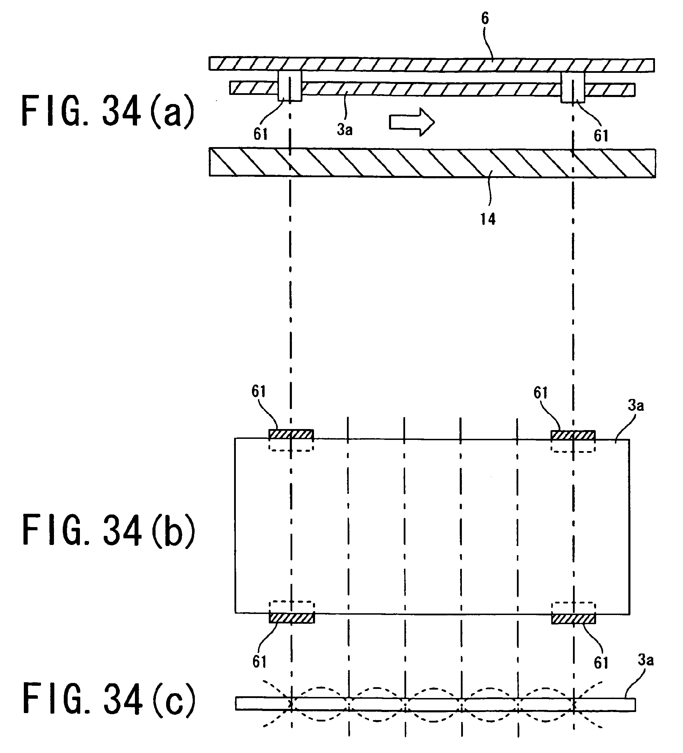

When the PZT element 3b is actuated to cause the vibrating plate 3a to vibrate in a high order resonant mode, the vibration of the vibrating plate 3a forms antinodes and nodes at different positions as shown in Figs. 34(b) and (c). With reference to Figs. 34(a) and (b), the above-mentioned four support members 61 are arranged at positions corresponding to those of first and last nodes. The vibrating plate 3a is thereby supported on opposite sides at the positions of the two nodes. By supporting the vibrating plate 3a at the positions of the nodes, the vibrating plate 3a resonates at a specific frequency to efficiently generate an acoustic wave.

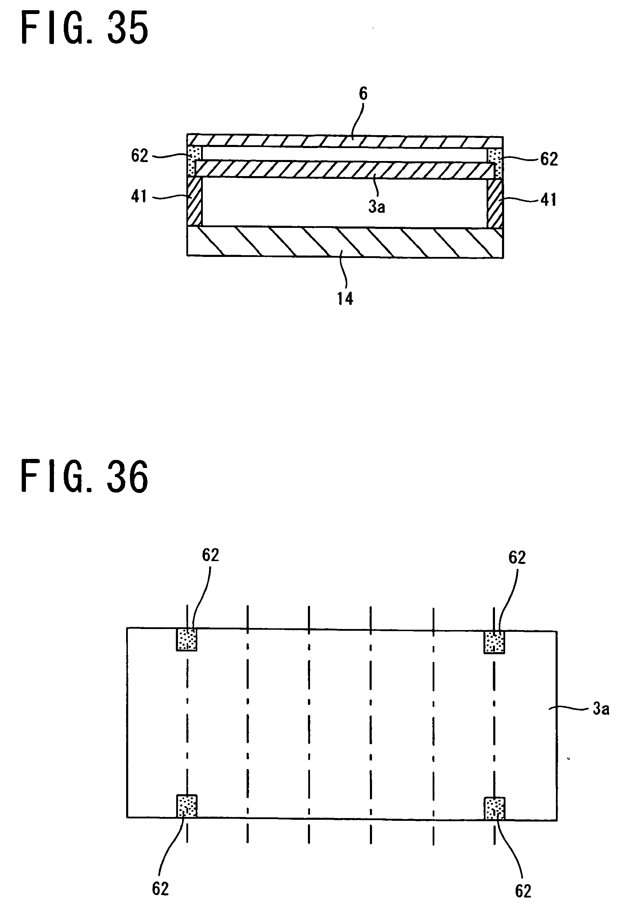

Figs. 35 and 36 show another support structure for the vibrating plate. In this support structure, the vibrating plate 3a is arranged on the both channel walls 41, 41, and is fixed thereto by adhesives 62 at four positions corresponding to those of first and last nodes.

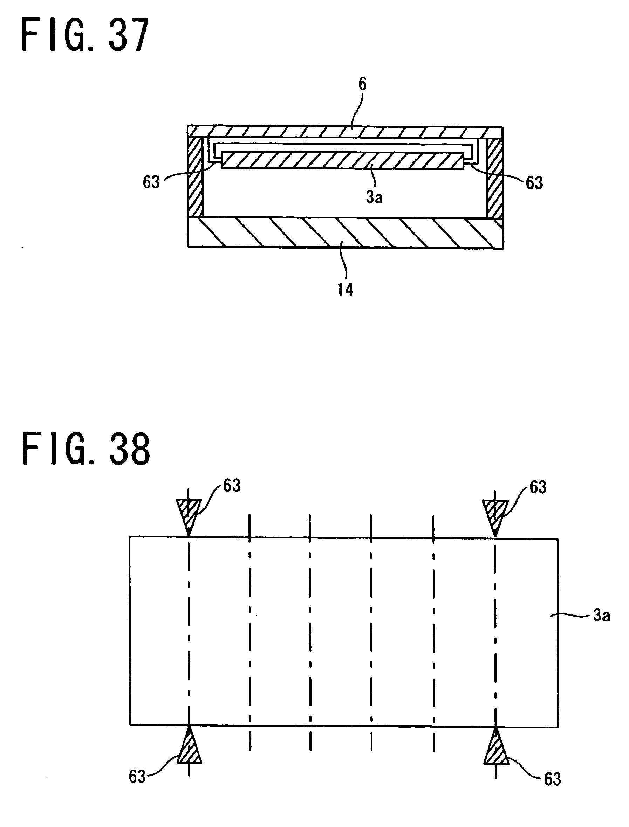

Figs. 37 and 38 show another support structure for the vibrating plate. In this support structure, the cover 6 has a rear surface provided with four support members 63 in the form of a pin. The respective ends of the four support members 63 are coupled to the opposite side surfaces of the vibrating plate 3a to thereby support the vibrating plate 3a at positions of first and last nodes.

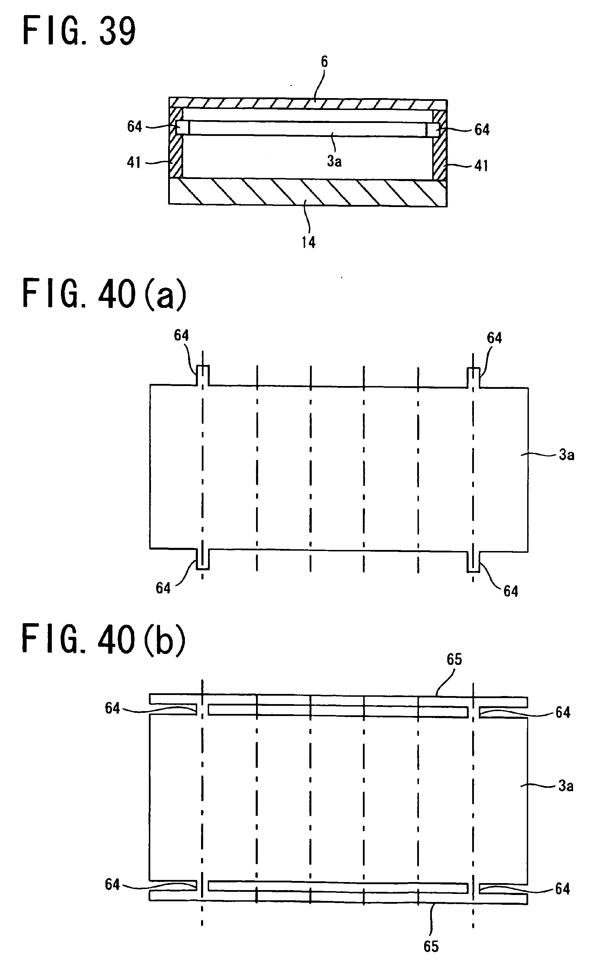

Figs. 39 and 40 show another support structure for the vibrating plate. In this support structure, four leg segments 64 projecting outwards from opposite side surfaces of the vibrating plate 3a are located at four positions corresponding to those of first and last nodes as shown in Fig. 40(a). These leg segments 64 are coupled to the channel walls 41, 41 as shown in Fig. 39 to thereby support the vibrating plate 3a at positions of the first and last nodes.

In place of four leg segments 64 shown in fig. 40a, two adjacent leg segments 64, 64 may be coupled by a coupling member 65. Then, the coupling members 65, 65 on opposite sides may be supported by the channel walls 41, 41.

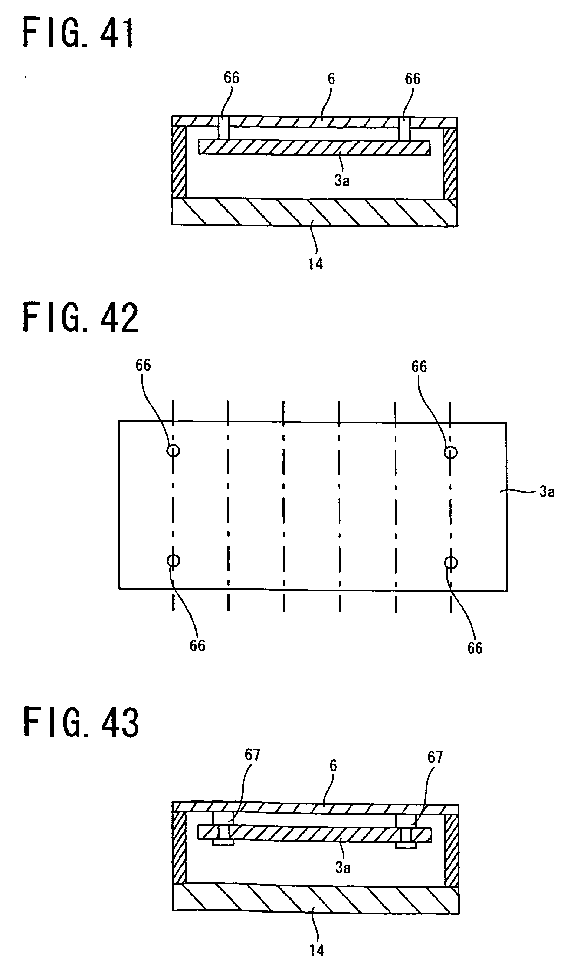

Figs. 41 and 42 show still another support structure for the vibrating plate. In this support structure, the vibrating plate 3a is given four screw members 66 arranged upwards at four positions corresponding to those of first and last nodes as shown in Fig. 42. These screw members 66 are screwed into the cover 6 for fixation, thereby supporting the vibrating plate 3a at positions of the first and last nodes.

As shown in Fig. 43, four holes may be bored in the vibrating plate 3a to which support members 67 are given. These support members 67 may be coupled to the rear surface of the cover 6.

### (Application to Electronic Apparatuses)

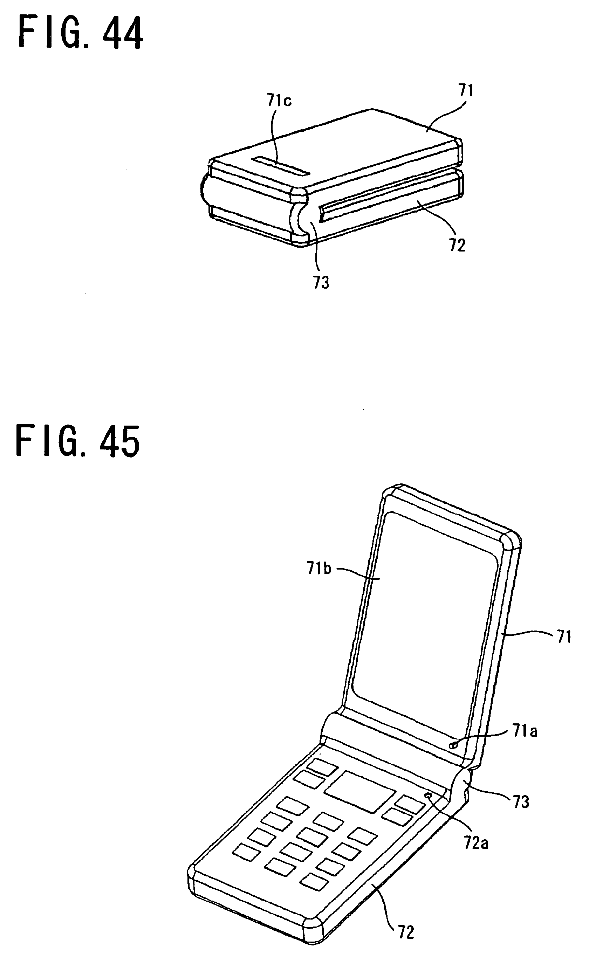

Figs. 44 and 45 show a flip cellular phone with the fuel cell according to the present invention. This flip cellular phone has a display casing 71 and an operation part casing 72 that are coupled to each other by a hinge mechanism 73 foldably with respect to each other. The display casing 71 has an inner surface given a main display 71b, and an outer surface given a sub display 71c. A projection 71a is formed on the inner surface of the display casing 71, and a switch 72a for detecting folding and unfolding is formed on the inner surface of the operation part casing 72 that switches between on and off by actuation of the projection 71a, thereby detecting the folding and unfolding of the display casing 71 and the operation part casing 72.

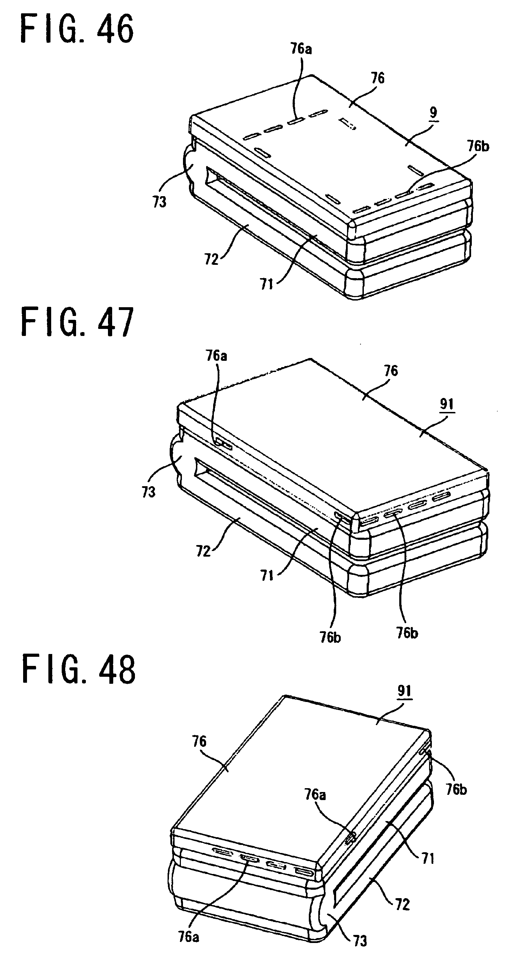

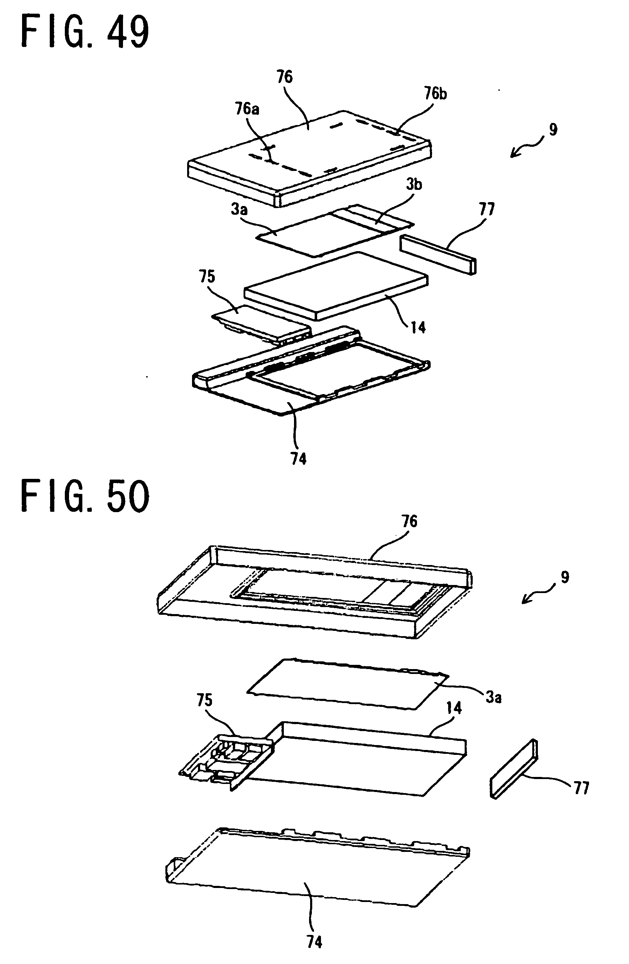

In this cellular phone, the fuel cell present invention is built into the display casing 71 or into the operation part casing 72. Alternatively, as shown in Fig. 46, a fuel cell 9 is attached to the rear surface of the display casing 71. As shown in Figs. 49 and 50, the fuel cell 9 is constituted by a substrate 74 with a fuel supply part and a fuel cartridge, a circuit section 75 with a control circuit and the like to be discussed later, the MEA 14, a drainage 77, the vibrating plate 3a, the PZT element 3b and the like, inside the cover 76. Electric power is supplied from this fuel cell to the body of the cellular phone. The cover 76 is given an inlet 76a through which air is to be sucked in, and an outlet 76b through which air is to be discharged.

If the cellular phone is of a configuration in which the high pressure side (the side of the inlet) of the fluid transfer device is arranged on the side of the hinge mechanism 73, since the casings 71 and 72 are given a high structural strength in a region near the hinge mechanism 73, sound pressure on the side of the hinge mechanism of the fluid transfer device can be set to a high level.

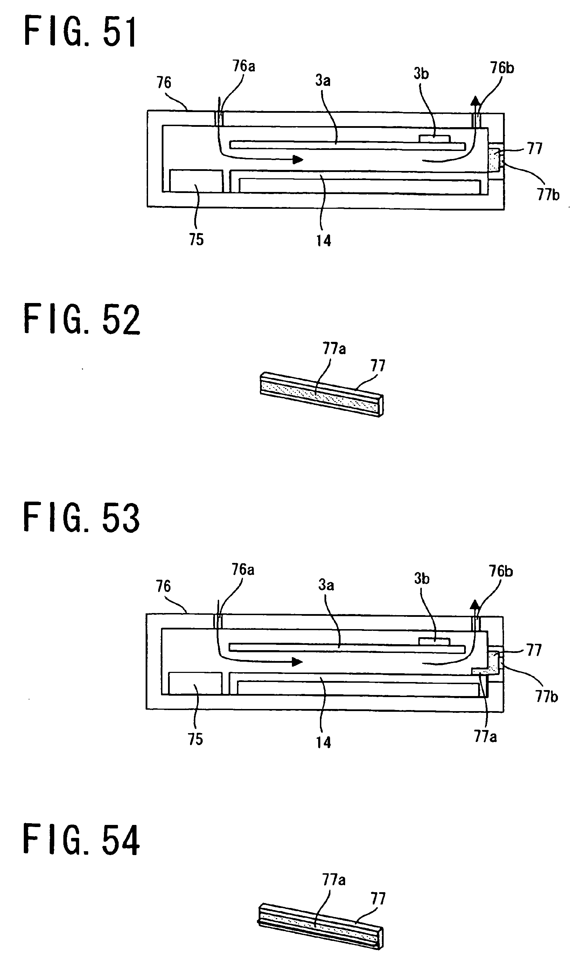

As shown in Fig. 51, the inlet 76a and the outlet 76b are arranged outside a region that is defined between the cover 76 and the vibrating plate 3a facing each other. Thus, air sucked in through the inlet 76a travels along a channel without being blocked by the vibrating plate 3a, and is thereafter discharged through the outlet 76b without being blocked by the vibrating plate 3a. This realizes efficient travel of air. When the drainage 77 with a water storage part 77a shown in Fig. 52 is arranged to face the terminal portion of the channel of air as shown in Fig. 51, water (unwanted substance) generated on the side of the cathode of the fuel cell is caused to flow together with air toward the drainage 77. This allows efficient drainage of water through a water drain port 77b. In the drainage 77, water flowing thereto with air is stored once in the water storage part 77a, and thereafter evaporates to be discharged through the water drain port 77b.

When the drainage 77 is of a structure in which the water storage part 77a juts out toward the channel of air as shown in Figs. 53 and 54, water generated on the side of the cathode of the fuel cell can be efficiently fed to the water storage part 77a of the drainage 77. The water discharge port 77b of the drainage 77 may have a mesh structure. Alternatively, by providing the drainage 77 removably, water stored in the water storage part 77a can be removed.

Likewise, when the fluid transfer device is applied to the side of the anode, a fluid is caused to flow toward the outlet to thereby efficiently discharge carbon dioxide (unwanted substance) generated on the side of the anode of the fuel cell.

As shown in Figs. 47 and 48, in a cellular phone in which a fuel cell 91 is attached to the rear surface of the display casing 71, the inlets 76a and the outlets 76b can be defined on the side surfaces and the top and bottom end surfaces of the cover 76.

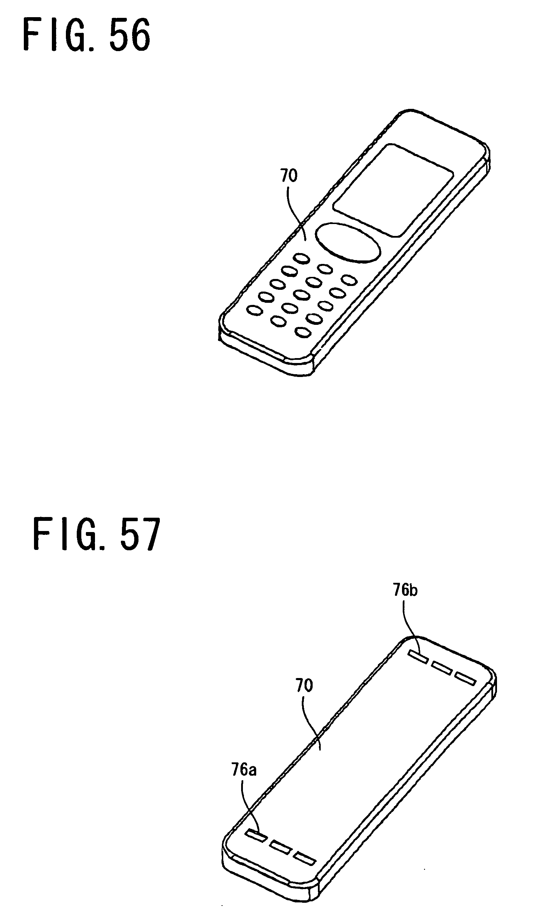

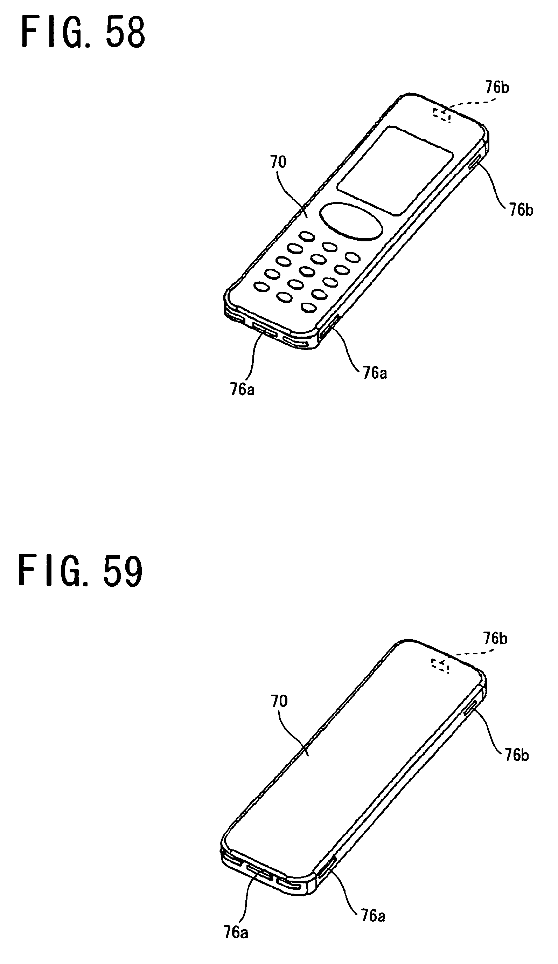

In a cellular phone of a straight type shown in Figs. 56 and 57, the inlets 76a and the outlets 76b are defined on the rear surfaces of a casing 70. The inlets 76a are arranged at the lower part of the rear surface of the casing 70, whereas the outlets 76b are arranged at the upper part of the rear surface of the casing 70. In a cellular phone of a straight type shown in Figs. 58 and 59, the inlets 76a and the outlets 76b are defined on the side surface and the bottom surface of the casing 70. The inlets 76a are arranged at the bottom surface and the lower part of the side surface of the casing 70, whereas the outlets 76b are arranged at the upper part of the side surface of the casing 70.

In these structures in which the inlets 76a are located at lower positions(in the direction of the action of gravity) and the outlets 76b are arranged at higher positions in normal use (during telephone conversation), air in the channel is heated by the MEA to go higher in the channel by buoyancy. This allows efficient travel of air from the inlets 76a toward the outlets 76b. Thus, high power consumption during telephone conversation can be covered enough by electric power generation at the fuel cell. Likewise, in a cellular phone of a slide type in which a pair of casings are coupled together by a sliding mechanism, an inlet is arranged at a lower position and an outlet is arranged at a higher position in one of the casings in normal use.

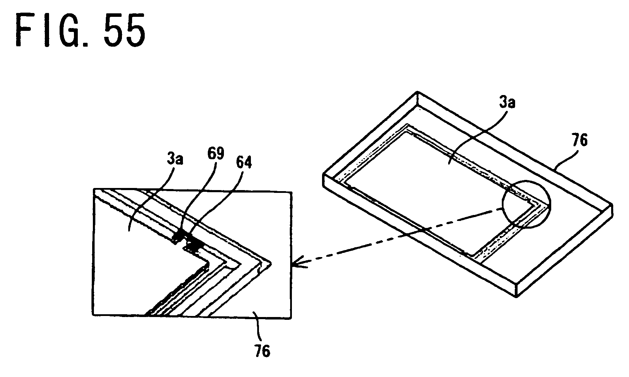

With reference to the above-discussed support structures (see Figs. 32 through 43) with which the vibrating plate 3a is supported on the cover 76 as shown in Fig. 55, by, for example, inserting a member 69 formed of a material providing vibration insulation such as hard rubber, silicon, acrylic or Teflon® between each leg segment 64 projecting outwards from the vibrating plate 3a and the cover 76, the propagation of vibration from the vibrating plate 3a to the casing to reduce noises attributed to the vibration of the casing can be suppressed. Alternatively, the support members (support member 61, support member 63, leg segment 64, coupling member 65, screw member 66, support member 67) themselves may be formed of a material providing vibration insulation such as hard rubber, silicon, acrylic, Teflon® to obtain the same effect.

Still alternatively, a sound absorbing sheet formed of urethane sponge, polyurethane foam and the like may be fixed to the inner surface of the cover 76 to face the vibrating plate 3a so that vibration of air in space other than the above-discussed channel such as the one defined between the cover 76 and the vibrating plate 3a is absorbed to thereby reduce noises attributed to the vibration of the casing.

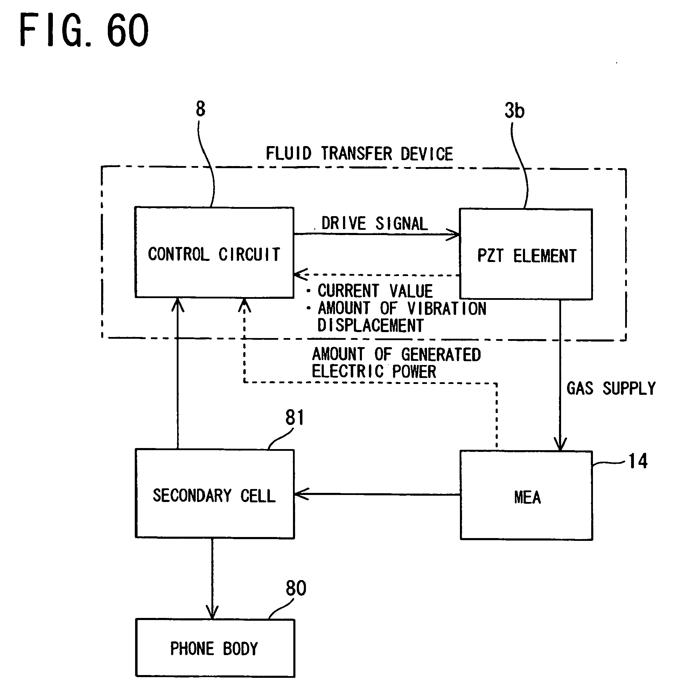

Fig. 60 is a block diagram showing the configuration of this fuel cell. In the fluid transfer device of the present invention including a control circuit 8 with a microcomputer or a DC/AD converter and the like, and the PZT element 3b, the control circuit 8 supplies a drive signal to the PZT element 3b to actuate the PZT element 3b. This causes information such as a current value, displacement of vibration and the like to be fed back from the PZT element 3b to the control circuit 8.

The actuation of the PZT element 3b realizes gas supply to the MEA 14, and electric power generated therefrom is used to charge a secondary cell 81. A phone body 80 is actuated by using the secondary cell 81 as a power supply. The amount of electric power generated at the MEA 14 is fed back to the control circuit 8. Electric power generated at the MEA 14 may also be directly supplied to the phone body 80.

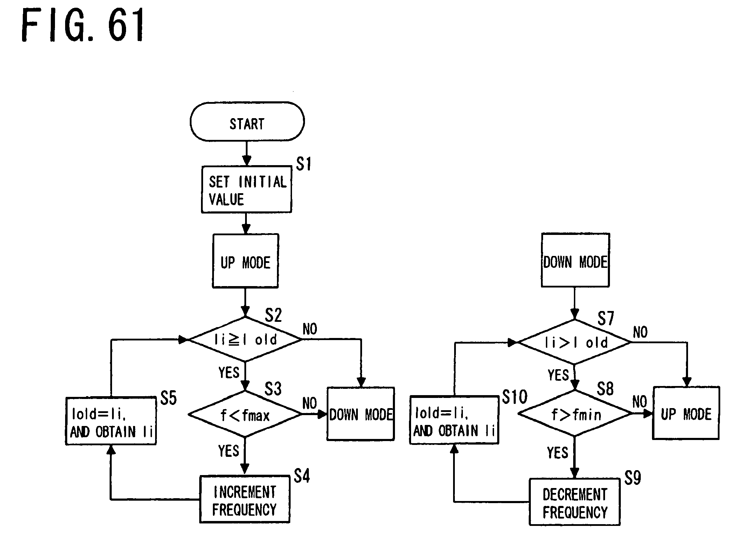

Fig. 61 shows the procedure for current control in the control circuit in the above-discussed fuel cell for making the vibrating plate vibrate at a resonance point. According to this current control, a current value obtained from the PZT element is maximized using a hill-climbing method to set the vibration frequency of the vibrating plate at a resonant frequency.

First, in step S1 shown in Fig. 61, a frequency f of the vibrating plate is set to an initial value (such as 70kHz) and current values are measured. The results are substituted for a current value at present Ii and a current value in the past Iold. In UP mode, the current value at present Ii and the current value in the past Iold are compared in step S2. If the current value Ii is equal to or greater than the current value Iold, the procedure proceeds to step S3 at which the frequency f and a certain maximum frequency fmax are compared. If the frequency f is smaller than the frequency fmax, the frequency is incremented in step S4.

Thereafter in step S5, the current value at present Ii is substituted for the current value in the past Iold, and another current value at present Ii is obtained. Then, the procedure returns to step S2 to compare the current value at present Ii and the current value in the past Iold. If it is determined that the current value Ii is smaller than the current value Iold in step S2, or if it is determined that the frequency f is equal to or greater than the maximum frequency fmax in step S3, the procedure is switched to DOWN mode.

In DOWN mode, the current value at present Ii and the current value in the past Iold are compared in step S7. If the current value Ii is greater than the current value Iold, the procedure proceeds to step S8 to compare the frequency f and a certain minimum frequency fmin. If the frequency f is greater than the frequency fmin, the frequency is decremented in step 9.

Thereafter in step S10, the current value at present Ii is substituted for the current value in the past Iold, and another current value at present Ii is obtained. Then, the procedure returns to step S7 to compare the current value at present Ii and the current value in the past Iold. If it is determined that the current value Ii is equal to or smaller than the current value Iold in step S7, or if it is determined that the frequency f is equal to or smaller than the minimum frequency fmin in step S8, the procedure is switched to UP mode.

The vibrating plate is thus capable of operating at a resonant frequency by being actuated in UP mode and DOWN mode.

This way of control is capable of constantly causing the vibrating plate to vibrate at a resonance point to generate large-scale acoustic streaming even if the frequency of the vibrating plate varies due to the generation of heat at the vibrating plate, deposition of impurities or the like,. In addition, power consumption can be reduced further by burst driving.

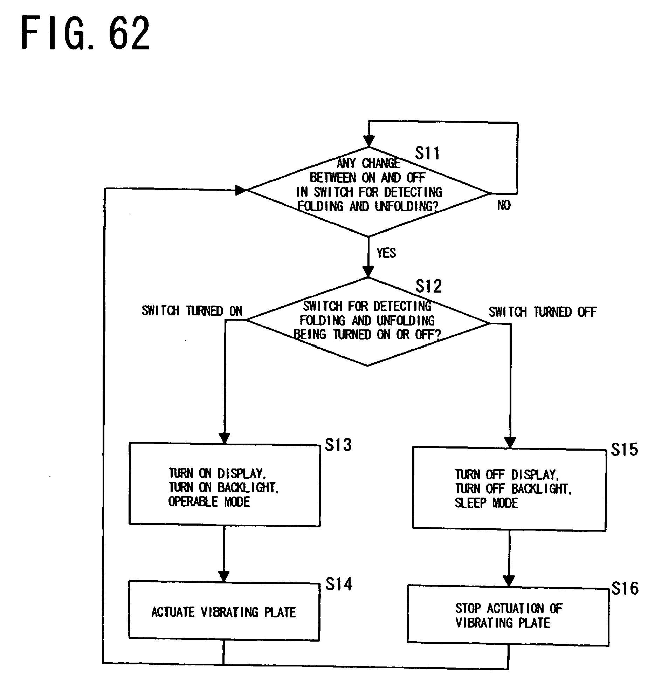

In the above-discussed cellular phone, power consumption is low in a standby mode, and increases when a display is turned on or backlight is turned on. In response, the actuation control of the vibrating plate shown in Fig. 62 may be employed, in which the vibrating plate is caused to vibrate to cause a fluid to travel only in the case where power consumption increases.

In the flip cellular phone shown in Figs. 44 and 45, for example, it is determined first whether there is a change between ON and OFF in the switch 72a for detecting folding and unfolding in step S11 of Fig. 62. If there is a change between ON and OFF, the flow proceeds to step S12 to determine whether the switch for detecting folding and unfolding has been changed to ON or OFF. If the cellular phone is unfolded to change the switch for detecting folding and unfolding to ON, the display is turned on and backlight is turned on to bring the cellular phone to an operable mode in step S13. Thereafter the flow goes to step S14 to actuate the vibrating plate of the fluid transfer device. On the other hand, if the cellular phone is folded to change the switch for detecting folding and unfolding to OFF, display is turned off and backlight is turned off to bring the cellular phone to a sleep mode in step S15. Thereafter the flow goes to step S16 to stop the actuation of the vibrating plate of the fluid transfer device. In the cellular phone with the sub display 71c as shown in Fig. 44, if the control is such that backlight for the sub display is turned off after a certain period of time elapses after folding of the casings, the vibration of the vibrating plate may be stopped after the backlight is turned off.

In the cellular phone of a straight type as shown in Figs. 56 through 59, if the control is such that backlight is turned on by the operation of operating buttons, and is turned off when no operation with buttons is recognized within a certain period of time, the actuation of the vibrating plate may be turned ON / OFF in compliance with operation with buttons, or ON/Off condition of the backlight.

It is to be appreciate that each of the embodiments and each of the exemplary configurations discussed above are in all aspects illustrative and not restrictive. The scope of the present invention is defined not by the foregoing description of the embodiments and exemplary configurations, but is defined by claims. Further, the scope of the present invention includes meaning equivalent to claims and all changes within the scope of claims.

The applicability of the fuel cell present invention is not limited to cellular phones. The fuel cell may be also applied as a power supply in all types of electronic apparatuses such as chargers for charging cellular phones and the like, AV apparatuses such as video cameras, portable game machines, navigation systems, handy cleaners, electric power generators for professional use, robots, and the like. Further, the applicability of the fluid transfer device according to the present invention is not limited to the structure used in fuel cells. The fluid transfer device of the present invention may be also applied to other uses than a power supply in all types of electronic apparatuses such as those listed above. For example, the fluid transfer device of the present invention may be arranged along a surface of an electronic circuit section that constitutes an electronic apparatus, in which the fluid transfer device serves to carry air for cooling to provide cooling for the electronic circuit section. Such use of the fluid transfer device allows a fuel cell to be configured in the form of a flat module.

The drainage 77 is arranged to face the terminal portion of the channel of the fluid transfer device (the terminal portion of the channel defined between the vibrating plate and the MEA facing each other). Alternatively, the drainage 77 may be arranged at any positions in the vicinity of the terminal portion such as those between the terminal portion and the outlet 76b to realize the same drainage effect.

The normal use is described as a state of telephone conversation, which is given as an example in the cellular phone discussed in the present embodiment. In the case of AV apparatuses such as video cameras, the normal use corresponds to a state of recording still images or moving images, or a state of viewing captured still images or moving images, and in the case of portable game machines, the normal use corresponds to a state of execution of games. Further, in the case of stationary electronic apparatuses such as navigation systems or electric power generators for professional use, the normal use corresponds to a state where these apparatuses are installed. As discussed, the normal use differs between apparatuses, and is not limited to a state of telephone conversation.

## Claims

1. A fluid transfer device for causing a fluid to travel along a channel (1), comprising:
a vibrating plate (3a) configured to provide standing wave vibration for generating an acoustic wave; and
a reflection wall (2), which is not a vibrating plate, configured to reflect said acoustic wave;
the vibrating plate (3a) and the reflection wall (2) being arranged to face each other at opposite sides of said channel (1) with said channel held therebetween;
**characterized in that** said vibrating plate (3a) and said reflection wall (2) are arranged so that a distance between said vibrating plate and said reflection wall is greater on the side of an exit (1b) than on the side of an entrance (1a) of said channel (1), such that multiple reflections of the acoustic wave between the vibrating plate (3a) and the reflection wall (2) generate a sound pressure gradient in said channel which provides net flow of said fluid from the entrance to the exit of said channel.

2. A fluid transfer device for causing a fluid to travel along a channel (1), comprising:
a vibrating plate (3a) configured to provide standing wave vibration for generating an acoustic wave;
and
a reflection wall (2), which is not a vibrating plate, configured to reflect said acoustic wave;
the vibrating plate (3a) and the reflection wall (2) being arranged to face each other at opposite sides of said channel (1) with said channel held therebetween;
**characterized in that** said vibrating plate (42) is greater at least either in bending stiffness or mass on the side of an exit than on the side of an entrance of said channel (40), such that multiple reflections of the acoustic wave between the vibrating plate (3a) and the reflection wall (2) generate a sound pressure gradient in said channel which provides net flow of said fluid from the entrance to the exit of said channel.

3. A fluid transfer device for causing a fluid to travel along a channel (1), comprising:
a vibrating plate(3a) configured to provide standing wave vibration for generating an acoustic wave;
and
a reflection wall (2), which is not a vibrating plate, configured to reflect said acoustic wave;
the vibrating plate (3a) and the reflection wall (2) being arranged to face each other at opposite sides of said channel (1) with said channel held therebetween;
**characterized in that** said vibrating plate (42) projects outwards from said reflection wall (14) on the side of one end portion of said channel (40) to define a region that does not face said reflection wall (14), such that multiple reflections of the acoustic wave between the vibrating plate (3a) and the reflection wall (2) generate a sound pressure gradient in said channel which provides net flow of said fluid from an entrance to an exit of said channel.

4. A fluid transfer device for causing a fluid to travel along a channel (1), comprising:
a vibrating plate (3a) configured to provide standing wave vibration for generating an acoustic wave;
and
a reflection wall (2), which is not a vibrating plate, configured to reflect said acoustic wave;
the vibrating plate (3a) and the reflection wall (2) being arranged to face each other at opposite sides of said channel (1) with said channel held therebetween;
**characterized in that** said reflection wall (14) is lower in acoustic impedance on the side of an exit than on the
side of an entrance of said channel (40), such that multiple reflections of the acoustic wave between the vibrating plate (3a) and the reflection wall (2) generate a sound pressure gradient in said channel which provides net flow of said fluid from the entrance to the exit of said channel.

5. A fluid transfer device for causing a fluid to travel along a channel (1), comprising:
a vibrating plate (3a) configured to provide standing wave vibration for generating an acoustic wave;
and
a reflection wall (2), which is not a vibrating plate, configured to reflect said acoustic wave;
the vibrating plate (3a) and the reflection wall (2) being arranged to face each other at opposite sides of said channel (1) with said channel held therebetween;
**characterized in that** a surface of said reflection wall (14) facing said vibrating plate (42) is defined so that an acoustic absorption coefficient is higher on the side of an exit than on the side of an entrance of said channel (40), such that multiple reflections of the acoustic wave between the vibrating plate (3a) and the reflection wall (2) generate a sound pressure gradient in said channel which provides net flow of said fluid from the entrance to the exit of said channel.

6. The fluid transfer device according to claim 1, wherein said vibrating plate (3a) is arranged so that a distance from said reflection wall (2) gradually increases in a direction from said entrance (1a) toward said exit (1b).

7. The fluid transfer device according to claim 2, wherein said vibrating plate (42) is greater in second moment of area on the side of said exit than on the side cf said entrance of said channel (40).

8. The fluid transfer device according to claim 2, wherein said vibrating plate (42) is higher in modulus of elasticity on the side of said exit than on the side of said entrance of said channel (40).

9. The fluid transfer device according to any one of claims 1 to 8, wherein said channel (40a) includes a plurality of channels arranged along a surface of said reflection wall (14).

10. The fluid transfer device according to any one of claims 1 to 9, wherein said vibrating plane (3a) is supported at a position of at least one of several nodes formed by vibration.

11. The fluid transfer device according to any one of claims 1 to 10, wherein resonance of said acoustic wave is generated in said channel (1, 40).

12. The fluid transfer device according to any one of claims 1 to 11, wherein said vibrating plate (3a, 42) is excited at a resonant frequency of said vibrating plate or at a frequency close to said resonant frequency.

13. The fluid transfer device according to any one of claims 1 to 12, wherein a vibration application part (3b, 43) for providing vibration to said vibrating plate (3a, 42) is provided on a surface of said vibrating plate.

## Patentansprüche

1. Fluidtransfervorrichtung, um zu veranlassen, dass sich ein Fluid längs eines Kanals (1) bewegt, die aufweist;
eine Schwingplatte (3a), die ausgebildet ist, um eine Stehwellenschwingung für das Erzeugen einer Schallwelle zu bewirken; und
eine Reflexionswand (2), die nicht eine Schwingplatte ist, die ausgebildet ist, um die Schallwelle zu reflektieren;
wobei die Schwingplatte (3a) und die Reflexionswand (2) so angeordnet sind, dass sie auf gegenüberliegenden Seiten des Kanals (1) einander gegenüberliegen, wobei der Kanal dazwischen gehalten wird;
**dadurch gekennzeichnet, dass** die Schwingplatte (3a) und die Reflexionswand (2) so angeordnet sind, dass ein Abstand zwischen der Schwingplatte und der Reflexionswand auf der Seite eines Austritts (1b) größer ist als auf der Seite eines Eintritts (1a) des Kanals (1), so dass mehrere Reflexionen der Schallwelle zwischen der Schwingplatte (3a) und der Reflexionswand (2) ein Schalldruckgefälle im Kanal erzeugen, das einen Wirkstrom des Fluids vom Eintritt zum Austritt des Kanals bewirkt.

2. Fluidtransfervorrichtung, um zu veranlassen, dass sich ein Fluid längs eines Kanals (1) bewegt, die aufweist:
eine Schwingplatte (3a), die ausgebildet ist, um eine Stehwellenschwingung für das Erzeugen einer Schallwelle zu bewirken; und
eine Reflexionswand (2), die nicht eine Schwingplatte ist, die ausgebildet ist, um die Schallwelle zu reflektieren;
wobei die Schwingplatte (3a) und die Reflexionswand (2) so angeordnet sind, dass sie auf gegenüberliegenden Seiten des Kanals (1) einander gegenüberliegen, wobei der Kanal dazwischen gehalten wird;
**dadurch gekennzeichnet, dass** die Schwingplatte (42) bei mindestens entweder der Biegesteifigkeit oder der Masse auf der Seite eines Austritts größer ist als auf der Seite eines Eintritts des Kanals (40), so dass mehrere Reflexionen der Schallwelle zwischen der Schwingplatte (3a) und der Reflexionswand (2) ein Schalldruekgefälle im Kanal erzeugen, das einen Wirkstrom des Fluids vom Eintritt zum Austritt des Kanals bewirkt.

3. Fluidtransfervorrichtung, um zu veranlassen, dass sich ein Fluid längs eines Kanals (1) bewegt, die aufweist:
eine Schwingplatte (3a), die ausgebildet ist, um eine Stehwellenschwingung für das Erzeugen einer Schallwelle zu bewirken; und
eine Reflexionswand (2), die nicht eine Schwingplatte ist, die ausgebildet ist, um die Schallwelle zu reflektieren;
wobei die Schwingplatte (3a) und die Reflexionswand (2) so angeordnet sind, dass sie auf gegenüberliegenden Seiten des Kanals (1) einander gegenüberliegen, wobei der Kanal dazwischen gehalten wird;
**dadurch gekennzeichnet, dass** die Schwingplatte (42) nach außen aus der Reflexionswand (14) auf der Seite des einen Endabschnittes des Kanals (40) vorsteht, um einen Bereich zu definieren, der nicht zur Reflexionswand (14) hin liegt, so dass mehrere Reflexionen der Schallwelle zwischen der Schwingplatte (3a) und der Reflexionswand (2) ein Schalldruckgefälle im Kanal erzeugen, das einen Wirkstrom des Fluids von einem Eintritt zu einem Austritt des Kanals bewirkt.

4. Fluidtransfervorrichtung, um zu veranlassen, dass sich ein Fluid längs eines Kanals (1) bewegt, die aufweist:
eine Schwingplatte (3a), die ausgebildet ist, um eine Stehwellenschwingung für das Erzeugen einer Schallwelle zu bewirken; und
eine Reflexionswand (2), die nicht eine Schwingplatte ist, die ausgebildet ist, um die Schallwelle zu reflektieren;
wobei die Schwingplatte (3a) und die Reflexionswand (2) so angeordnet sind, dass sie auf gegenüberliegenden Seiten des Kanals (1) einander gegenübarliegen, wobei der Kanal dazwischen gehalten wird;
**dadurch gekennzeichnet, dass** die Reflexionswand (14) bei der akustischen Impedanz auf der Seite eines Austritts niedriger ist als auf der Seite eines Eintritts des Kanals (40), so dass mehrere Reflexionen der Schallwelle zwischen der Schwingplatte (3a) und der Reflexionswand (2) ein Schalldruckgefälle im Kanal erzeugen, das einen Wirkstrom des Fluids vom Eintritt zum Austritt des Kanals bewirkt.

5. Fluidtransfervorrichtung, um zu veranlassen, dass sich ein Fluid längs eines Kanals (1) bewegt, die aufweist:
eine Schwingplatte (3a), die ausgebildet ist, um eine Stehwellenschwingung für das Erzeugen einer Schallwelle zu bewirken; und
eine Reflexionswand (2), die nicht eine Schwingplatte ist, die ausgebildet ist, um die Schallwelle zu reflektieren;
wobei die Schwingplatte (3a) und die Reflexionswand (2) so angeordnet sind, dass sie auf gegenüberliegenden Seiten des Kanals (1) einander gegenüberliagen, wobei der Kanal dazwischen gehalten wird;
**dadurch gekennzeichnet, dass** eine Oberfläche der Reflexionswand (14), die zur Schwingplatte (42) hin liegt, so definiert wird, dass ein akustischer Absorptionskoeffizient auf der Seite eines Austritts höher ist als auf der Seite eines Eintritts des Kanals (40), so dass mehrere Reflexionen der Schallwelle zwischen der Schwingplatte (3a) und der Reflexionswand (2) ein Schalldruckgefälle im Kanal erzeugen, das einen Wirkstrom des Fluids vom Eintritt zum Austritt des Kanals bewirkt.

6. Fluidtransfervorrichtung nach Anspruch 1, bei der die Schwingplatte (3a) so angeordnet ist, dass ein Abstand von der Reflexionswand (2) allmählich in einer Richtung vom Eintritt (1a) zum Austritt (1b) hin größer wird.

7. Fluidtransfervorrichtung nach Anspruch 2, bei der die Schwingplatte (42) im zweiten Flächenträgheitsmoment auf der Seite des Austritts größer ist als auf der Seite des Eintritts des Kanals (40).

8. Fluidtransfervorrichtung nach Anspruch 2, bei der die Schwingplatte (42) einen höheren Elastizitätsmodul auf der Seite des Austritts als auf der Seite des Eintritts des Kanals (40) aufweist.

9. Fluidtransfervorrichtung nach einem Ansprüche 1 bis 8, bei der der Kanal (40a) eine Vielzahl von Kanälen umfasst, die entlang einer Fläche der Reflexionswand 14 angeordnet sind.

10. Fluidtransfervorrichtung nach einem Ansprüche 1 bis 9, bei der die Schwingplatte (3a) in einer Position von mindestens einem von mehreren durch die Schwingung ausgebildeten Knoten gestützt wird.

11. Fluidtransfervorrichtung nach einem Ansprüche 1 bis 10, bei der die Resonanz der Schallwelle im Kanal (1, 40) erzeugt wird.

12. Fluidtransfervorrichtung nach einem Ansprüche 1 bis 11, bei der die Schwingplatte (3a, 42) bei einer Resonanzfrequenz der Schwingplatte oder bei einer Frequenz nahe der Resonanzfrequenz angeregt wird.

13. Fluidtransfervorrichtung nach einem Ansprüche 1 bis 12, bei der ein Schwingungsanwendungsteil (3b, 43) für das Bewirken einer Schwingung der Schwingplatte (3 a, 42) auf einer Fläche der Schwingplatte bereitgestellt wird.

## Revendications

1. Dispositif de transfert d'un fluide, pour entraîner l'écoulement d'un fluide le long d'un canal (1), comprenant :
une plaque vibrante (3a), configurée de sorte à fournir des vibrations d'onde stationnaire pour produire une onde acoustique ; et
une paroi de réflexion (2), ne constituant pas une plaque vibrante, configurée de sorte à réfléchir ladite onde acoustique ;
la plaque vibrante (3a) et la paroi de réflexion (2) étant agencées de sorte à se faire face au niveau des côtés opposés dudit canal (1), ledit canal étant retenu entre elles ;
**caractérisé en ce que** ladite plaque vibrante (3a) et ladite paroi de réflexion (2) sont agencées de sorte qu'une distance entre ladite plaque vibratoire et ladite paroi de réflexion est plus grande sur le côté d'une sortie (1b) que sur le côté d'une entrée (1a) dudit canal (1), de sorte que de multiples réflexions de l'onde acoustique entre la plaque vibrante (3a) et la paroi de réflexion (2) produisent un gradient de pression sonore dans ledit canal entraînant un écoulement net dudit fluide, de l'entrée vers la sortie dudit canal.

2. Dispositif de transfert d'un fluide pour entraîner l'écoulement d'un fluide le long d'un canal (1), comprenant :
une plaque vibrante (3a), configurée de sorte à fournir des vibrations d'onde stationnaire pour produire une onde acoustique ; et
une paroi de réflexion (2), ne constituant pas une plaque vibrante, configurée de sorte à réfléchir ladite onde acoustique ;
la plaque vibrante (3a) et la paroi de réflexion (2) étant agencées de sorte à se faire face au niveau des côtés opposés dudit canal (1), ledit canal étant retenu entre elles ;
**caractérisé en ce que** ladite plaque vibrante (42) présente une valeur supérieure, concernant au moins la rigidité à la flexion ou la masse, sur le côté d'une sortie que sur le côté d'une entrée dudit canal (40), de sorte que de multiples réflexions de l'onde acoustique entre la plaque vibrante (3a) et la paroi de réflexion (2) produisent un gradient de pression sonore dans ledit canal entraînant un écoulement net dudit fluide, de l'entrée vers la sortie dudit canal.

3. Dispositif de transfert d'un fluide pour entraîner l'écoulement d'un fluide le long d'un canal (1), comprenant :
une plaque vibrante (3a), configurée de sorte à fournir des vibrations d'onde stationnaire pour produire une onde acoustique ; et
une paroi de réflexion (2), ne constituant pas une plaque vibrante, configurée de sorte à réfléchir ladite onde acoustique ;
la plaque vibrante (3a) et la paroi de réflexion (2) étant agencées de sorte à se faire face au niveau des côtés opposés dudit canal (1), ledit canal étant retenu entre elles ;
**caractérisé en ce que** plaque vibrante (42) déborde vers l'extérieur de ladite paroi de réflexion (14) sur le côté d'une partie d'extrémité dudit canal (40), pour définir une région ne faisant pas face à ladite paroi de réflexion (14), de sorteque de multiples réflexions de l'onde acoustique entre la plaque vibrante (3a) et la paroi de réflexion (2) produisent un gradient de pression sonore dans ledit canal entraînant un écoulement net dudit fluide, de l'entrée vers la sortie dudit canal.

4. Dispositif de transfert d'un fluide pour entraîner l'écoulement d'un fluide le long d'un canal (1), comprenant :
une plaque vibrante (3a), configurée de sorte à fournir des vibrations d'onde stationnaire pour produire une onde acoustique ; et
une paroi de réflexion (2), ne constituant pas une plaque vibrante, configurée de sorte à réfléchir ladite onde acoustique ;
la plaque vibrante (3a) et la paroi de réflexion (2) étant agencées de sorte à se faire face au niveau des côtés opposés dudit canal (1), ledit canal étant retenu entre elles ;
**caractérisé en ce que** ladite paroi de réflexion (14) présente une impédance acoustique plus faible sur le côté d'une sortie que sur le côté d'une entrée dudit canal (40), de sorte que de multiples réflexions de l'onde acoustique entre la plaque vibrante (3a) et la paroi de réflexion (2) produisent un gradient de pression sonore dans ledit canal entraînant un écoulement net dudit fluide, de l'entrée vers la sortie dudit canal.

5. Dispositif de transfert d'un fluide pour entraîner l'écoulement d'un fluide le long d'un canal (1), comprenant :
une plaque vibrante (3a), configurée de sorte à fournir des vibrations d'onde stationnaire pour produire une onde acoustique ; et
une paroi de réflexion (2), ne constituant pas une plaque vibrante, configurée de sorte à réfléchir ladite onde acoustique ;
la plaque vibrante (3a) et la paroi de réflexion (2) étant agencées de sorte à se faire face au niveau des côtés opposés dudit canal (1), ledit canal étant retenu entre elles ;
**caractérisé en ce qu'**une surface de ladite paroi de réflexion (14) faisant face à ladite plaque vibrante (42) est définie de sorte qu'un coefficient d'absorption acoustique est plus élevé sur le côté d'une sortie que sur le côté d'une entrée dudit canal (40), de sorte que de multiples réflexions de l'onde acoustique entre la plaque vibrante (3a) et la paroi de réflexion (2) produisent un gradient de pression sonore dans ledit canal entraînant un écoulement net dudit fluide, de l'entrée vers la sortie dudit canal.

6. Dispositif de transfert d'un fluide selon la revendication 1, dans lequel ladite plaque vibrante (3a) est agencée de sorte qu'une distance par rapport à ladite paroi de réflexion (2) est progressivement accrue dans une direction allant de ladite entrée (1a) vers ladite sortie (1b).

7. Dispositif de transfert d'un fluide selon la revendication 2, dans lequel ladite plaque vibrante (42) présente un deuxième moment de surface plus grand sur le côté de ladite sortie que sur le côté de ladite entrée dudit canal (40).

8. Dispositif de transfert d'un fluide selon la revendication 2, dans lequel ladite plaque vibrante (42) présente un module d'élasticité plus grand sur le côté de ladite sortie que sur le côté de ladite entrée dudit canal (40).

9. Dispositif de transfert d'un fluide selon l'une quelconque des revendications 1 à 8, dans lequel ledit canal (40a) englobe plusieurs canaux agencés le long d'une surface de ladite paroi de réflexion (14).

10. Dispositif de transfert d'un fluide selon l'une quelconque des revendications 1 à 9, dans lequel ladite plaque vibrante (3a) est supportée au niveau d'une position d'au moins un de plusieurs noeuds formés par des vibrations.

11. Dispositif de transfert d'un fluide selon l'une quelconque des revendications 1 à 10, dans lequel la résonance de ladite onde acoustique est produite dans ledit canal (1, 40).

12. Dispositif de transfert d'un fluide selon l'une quelconque des revendications 1 à 11, dans lequel ladite plaque vibrante (3a, 42) est excitée à une fréquence de résonance de ladite plaque vibrante ou à une fréquence proche de ladite fréquence de résonance.

13. Dispositif de transfert d'un fluide selon l'une quelconque des revendications 1 à 12, dans lequel une partie d'application des vibrations (3b, 43) pour transmettre des vibrations à ladite plaque vibrante (3a, 42) est agencée sur une surface de ladite plaque vibrante.
